# EUROPEAN PATENT APPLICATION

(11) **EP 4 795 926 A2**
(43) Date of publication of application: **26.08.2026**
(21) Application number: 26182405.6
(22) Date of filing: 16.11.2023
(51) Int. Cl.: A01G 9/24

(54) **VERTICAL PLANT GROWING SYSTEMS AND TECHNIQUES**

(30) Priority: 16.11.2022 US 202263425818 P; 05.06.2023 US 202363471124 P
(62) Document number(s) of the earlier application(s) in accordance with Art. 76 EPC: 23828589.4 / 4 577 036
(71) Applicant: Midrib Farms Holding, LLC, Westminster, MD 21157 (US)
(72) Inventor: MARTCHEK, David Andrew, Westminster, MD, 21157 (US)
(74) Representative: Venner, Julia Ann

(57) **Abstract**

The present teachings include a vertical growing system for plants suitable for high crop yield using hydroponic growing techniques. An exemplary vertical growing system includes one or more plant supports having a vertical arrangement structurally configured to increase production in a growing space. One or more lighting apparatus may be arranged vertically and located adjacent to the plant supports, where the lighting apparatus is structurally configured to create a relatively wide and uniform canopy, and to allow the lighting apparatus to be in relatively close proximity to plant supports. Embodiments may also or instead include an overhead support structure eliminating the requirement for other supports around the cultivation area thereby reducing the overall size of the growing system, a cooling system and/or a ventilation system (either of which may be supported by the overhead support structure), and an irrigation system that may be supported on the overhead support structure.

## Description

### CROSS-REFERENCE TO RELATED APPLICATIONS

This application claims priority to U.S. Provisional Pat. App. No. 63/471,124 filed on June 5, 2023, and U.S. Provisional Pat. App. No. 63/425,818 filed on November 16, 2022, where the entire contents of each of the foregoing applications is hereby incorporated by reference herein.

### FIELD

The present disclosure generally relates to devices, systems, and methods related to horticulture, and more specifically to vertical plant growing systems, plant support systems, environmental control systems, and lighting systems therefor.

### BACKGROUND

Hydroponic farming techniques that attempt to maximize crop yield may include supports for plants arranged horizontally throughout a growing space, sometimes in a stacked configuration (e.g., stacked horizontal pallet racking styles). Typically, slots or other voids may be formed in supports (e.g., milled by a computer numerical control (CNC) machine), where such supports are customized according to the plant to be grown. Further, existing systems may require external supports, making them bulky, difficult to move, and thus difficult to cultivate crops therefrom. In contrast, vertical growing systems may more efficiently utilize a growing space.

While vertical growing systems exist, many have issues with one or more of weight, portability, ease in cultivation, ventilation, overheating, humidity control, lighting access and/or light distribution and efficiency, irrigation, and the like. There remains a need for improved vertical plant growing systems and techniques.

### SUMMARY

The present teachings include a vertical growing system for plants suitable for high crop yield using hydroponic growing techniques. An exemplary vertical growing system includes one or more plant supports having a vertical arrangement structurally configured to increase production in a growing space. One or more lighting apparatus may be arranged vertically and located adjacent to the plant supports, where the lighting apparatus is structurally configured to create a relatively wide and uniform canopy, and to facilitate heat dissipation therefrom, thus allowing the lighting apparatus to be in relatively close proximity to plant supports. Embodiments may include an overhead support structure that eliminates the requirement for other external support around the cultivation area, thereby reducing the overall size of the growing system. The vertical growing system may include a cooling system and/or a ventilation system, either of which may be supported on the overhead support structure. The vertical growing system may include an irrigation system that may be supported on the overhead support structure.

In certain aspects, a vertical growing system for plants in cooperation with planting media disclosed herein may include a plant support apparatus supported by a first overhead support structure. The plant support apparatus may include a housing having a first opening on a first side thereof and a second opening on a second side thereof, the second side opposing the first side, and the housing defining a first chamber accessible through the first opening and a second chamber accessible through the second opening, the first chamber and the second chamber structurally configured to hold planting media along a length of the housing and to hold one or more plants in engagement with the planting media in a substantially fixed position relative to the housing. The system may also include a lighting apparatus supported from a second overhead support structure and disposed adjacent to the plant support apparatus. The lighting apparatus may include: one or more lighting support structures, where each lighting support structure may include a first side including a first engagement region having at least two mounting surfaces collectively forming a substantially V-shape, and a second side including a second engagement region having at least two mounting surfaces collectively forming a substantially V-shape; and at least one light source coupled to each of the at least two mounting surfaces on at least one of the first engagement region and the second engagement region of the one or more lighting support structures. In the system, one of the first opening and the second opening of the plant support apparatus may be oriented to face one of the first side and the second side of the lighting apparatus, so that the one or more plants supported in the plant support apparatus are facing the at least one light source of the lighting apparatus.

Implementations may include one or more of the following features. The lighting apparatus may further include one or more drivers electrically coupled to the at least one light source to control power supplied thereto, where the one or more drivers are located remotely from the one or more lighting support structures to mitigate heat transfer to the first side and the second side of the one or more lighting support structures. The plant support apparatus may further include a blocker disposed along one or more of the first opening and the second opening, the blocker structurally configured to mitigate water from passing from one or more of the first chamber and the second chamber to an external environment, and the blocker structurally configured to engage with, and support, a shoot system of the one or more plants. The first overhead support structure and the second overhead support structure may be the same structure. At least one of the first overhead support structure and the second overhead support structure may include a rail, where at least one of the plant support apparatus and the lighting apparatus are movable along the rail. The vertical growing system may include one or more of a cooling system and a ventilation system at least partially located above the lighting apparatus. One or more of the cooling system and the ventilation system may be located above one or more of the first overhead support structure and the second overhead support structure. One or more of the cooling system and the ventilation system may include substantially flexible ducts. The vertical growing system may include a cooling system structurally configured to create a flow of air through the one or more lighting support structures. The vertical growing system may include: a water supply line in fluid communication with a water source; and a first outlet and a second outlet in fluid communication with the water supply line, the first outlet positioned above the first chamber for supplying water to planting media disposed in the first chamber, and the second outlet positioned above the second chamber for supplying water to planting media disposed in the second chamber. At least one of the first outlet and the second outlet may include a drip line. The vertical growing system may include a reclaim irrigation system including a trough disposed beneath the plant support apparatus, the trough structurally configured to collect water that passes through one or more of the first chamber and the second chamber. The vertical growing system may include a reservoir in fluid communication with the trough, and a pump in fluid communication with the reservoir. The pump may be structurally configured to move water from the reservoir to one or more of the water supply line and the water source. The trough may be pitched toward the reservoir. The water supply line may be positioned above the plant support apparatus. A rail of a positioning system may be disposed between the water supply line and the plant support apparatus, the plant support apparatus movable along the rail via the positioning system. The vertical growing system may include one or more regulators along one or more of the water supply line, the first outlet, and the second outlet, the one or more regulators structurally configured to control a flow of the water. At least one of the first outlet and the second outlet may be connected to an outlet coupler structurally configured for releasably engaging with the first overhead support structure. The outlet coupler may be magnetically engageable with the first overhead support structure. The outlet coupler may have an engagement surface shaped substantially complementary to a portion of the first overhead support structure. The vertical growing system may include a plurality of misters plumbed in a vertical series and located adjacent to the lighting apparatus. At least a portion of the plurality of misters may be structurally configured to be deployed along a lower elevation of the vertical growing system. The vertical growing system may include a ventilation system at least partially located adjacent to the plant support apparatus. The ventilation system may include one or more fan mounts structurally configured for mounting one or more fans thereto in a substantially vertical configuration. Each of the one or more fan mounts may be structurally configured for coupling to another of the one or more fan mounts. A plurality of the one or more fan mounts may be structurally configured for hanging from at least one of the first overhead support structure and the second overhead support structure. At least one of the one or more fan mounts may include an engagement coupler located at an upper end of the at least one of the one or more fan mounts. The vertical growing system may further include a ventilation system motor coupled to at least one of the one or more fan mounts and configured to adjust a position of the at least one of the one or more fan mounts. The vertical growing system may include a ventilation system controller in communication with the one or more fans for control thereof.

The present teachings may further include a lighting apparatus for a vertical growing system. The lighting apparatus may include at least two mounting surfaces arranged in a substantially vertical orientation, where one or more light sources-e.g., light-emitting diodes (LEDs)-are coupled to each mounting surface. The mounting surfaces may collectively form a substantially V-shape structurally configured to create a wide and uniform canopy, thus allowing cultivation of a relatively large number of plants in a growing space. Certain embodiments of the lighting apparatus include four mounting surfaces collectively forming two opposing substantially V-shaped sides, where this configuration allows illumination of plants on each of the two opposing sides of the lighting apparatus. Features of the lighting apparatus may allow lights to be located in relatively close proximity to the plants while mitigating over-heating and the like. Further, to this end, electrical drivers may be located remotely from the lighting support structures, and/or the lighting support structures may be structurally configured to pass heat from those or other heat-producing elements, e.g., through interstitial spaces thereof.

In certain aspects, a lighting apparatus for a vertical growing system for plants disclosed herein may include: one or more lighting support structures, each lighting support structure including a first side with a first engagement region having at least two mounting surfaces collectively forming a substantially V-shape, and a second side including a second engagement region having at least two mounting surfaces collectively forming a substantially V-shape. The lighting apparatus may also include: at least one light source coupled to each of the at least two mounting surfaces on at least one of the first engagement region and the second engagement region of the one or more lighting support structures; and one or more drivers electrically coupled to the at least one light source to control power supplied thereto, the one or more drivers located remotely from the one or more lighting support structures to mitigate heat transfer to the first side and the second side of the one or more lighting support structures. The at least one light source may include one or more light-emitting diodes (LEDs).

In certain aspects, a lighting apparatus for a vertical growing system for plants disclosed herein may include one or more lighting support structures, where each lighting support structure may include: a first side and a second side opposing the first side; a first mounting surface and a second mounting surface disposed along the first side, the first mounting surface substantially aligned along a first axis, the second mounting surface substantially aligned along a second axis, where the first axis intersects the second axis such that the first mounting surface and the second mounting surface form a first substantially V-shaped structure on the first side with the first mounting surface oriented away from the second mounting surface; and a third mounting surface and a fourth mounting surface disposed along the second side, the third mounting surface substantially aligned along a third axis, the fourth mounting surface substantially aligned along a fourth axis, where the third axis intersects the fourth axis such that the third mounting surface and the fourth mounting surface form a second substantially V-shaped structure on the second side with the third mounting surface oriented away from the fourth mounting surface. The lighting apparatus may further include: a first set of light-emitting diodes (LEDs) coupled to the first mounting surface, and a second set of LEDs coupled to the second mounting surface, the first set of LEDs and the second set of LEDs structurally configured to emit light directed toward one or more plants disposed adjacent to the first side of the one or more lighting support structures; and one or more drivers electrically coupled to at least one of the first set of LEDs and the second set of LEDs, the one or more drivers configured to control power supplied thereto, and the one or more drivers located remotely from the one or more lighting support structures to mitigate heat transfer to at least one of the first side and the second side of the one or more lighting support structures.

Implementations may include one or more of the following features. The lighting apparatus may include a third set of LEDs coupled to the third mounting surface, and a fourth set of LEDs coupled to the fourth mounting surface, the third set of LEDs and the fourth set of LEDs structurally configured to emit light directed toward one or more plants disposed adjacent to the second side of the one or more lighting support structures. The first side and the second side may be coupled via a core and disposed on opposite sides of the core. The core may be substantially hollow. Each lighting support structure may include one or more interstitial spaces formed between one or more of the first mounting surface and the second mounting surface. At least one of the one or more interstitial spaces may be structurally configured to allow heat to pass therethrough at least in part to mitigate heat transfer to one or more plants disposed adjacent to the lighting apparatus. At least one of the one or more interstitial spaces may be structurally configured to permit airflow through the one or more lighting support structures. At least one of the one or more interstitial spaces may be structurally configured to provide a pathway along a length of the one or more lighting support structures. One or more of the first mounting surface, the second mounting surface, the third mounting surface, and the fourth mounting surface may include a void structurally configured to receive a fastener. The void may include threading structurally configured for engagement with a threaded fastener for mounting one or more of an LED and a printed circuit board. The lighting apparatus may include an engagement element disposed on a top end of the one or more lighting support structures, the engagement element couplable to a fixture for hanging the lighting apparatus adjacent to one or more plants. The first substantially V-shaped structure may include an angle of about 30 degrees between the first mounting surface and the second mounting surface. The lighting apparatus may include a cover at least partially surrounding the one or more lighting support structures and LEDs coupled thereto. The cover may be structurally configured to prevent water from contacting the one or more lighting support structures and LEDs coupled thereto, where the cover is structurally configured to permit light emitted from LEDs to pass through the cover. The cover may be structurally configured for sliding engagement with the lighting support structure. The cover may include one or more projections structurally configured for sliding engagement with the lighting support structure. The cover may include a substantially open top surface and a substantially open bottom surface. The cover may have a substantially cylindrical shape. The lighting apparatus may include control circuitry for LEDs, the control circuitry coupled to the one or more lighting support structures. Control circuitry may be coupled to each of the first mounting surface and the second mounting surface. Control circuitry may be coupled to each of a third mounting surface and a fourth mounting surface. The control circuitry may include a printed circuit board (PCB). The first set of LEDs and the second set of LEDs may each be coupled to a corresponding PCB that is coupled to a corresponding mounting surface of the one or more lighting support structures. A third set of LEDs and a fourth set of LEDs may each be coupled to a corresponding PCB that is coupled to a corresponding mounting surface of the one or more lighting support structures.

In certain aspects, a method of growing plants in a vertical growing system disclosed herein may include: supporting a plant support apparatus on a first overhead support structure, the plant support apparatus including a housing having a first opening on a first side thereof and a second opening on a second side thereof, the second side opposing the first side, and the housing defining a first chamber accessible through the first opening and a second chamber accessible through the second opening; inserting planting media into at least one of the first chamber and the second chamber along a length of the housing; planting one or more plants in engagement with the planting media in a substantially fixed position relative to the housing; supporting a lighting apparatus on a second overhead support structure, the lighting apparatus disposed adjacent to the plant support apparatus, the lighting apparatus including one or more lighting support structures, each lighting support structure including a first side with a first engagement region having at least two mounting surfaces collectively forming a substantially V-shape, and a second side including a second engagement region having at least two mounting surfaces collectively forming a substantially V-shape; coupling at least one light source to each of the at least two mounting surfaces on at least one of the first engagement region and the second engagement region of the one or more lighting support structures; and orienting one of the first opening and the second opening of the plant support apparatus to face one of the first side and the second side of the lighting apparatus, so that the one or more plants in the plant support apparatus are facing the at least one light source of the lighting apparatus.

Implementations may include one or more of the following features. The method may include: connecting the plant support apparatus to a positioning system including a rail; moving the plant support apparatus along the rail into a remote location via the positioning system; and harvesting plants from the plant support apparatus in the remote location. The method may include: connecting the plant support apparatus to a positioning system including a rail; moving the plant support apparatus along the rail into a remote location via the positioning system; and cleaning the plant support apparatus in the remote location. The method may include: disposing a blocker along one or more of the first opening and the second opening; and engaging a shoot system of the one or more plants with the blocker, thereby supporting the one or more plants with the blocker. The method may include: connecting a first outlet and a second outlet in fluid communication with a water source via a water supply line; positioning the first outlet above the first chamber and the second outlet above the second chamber; supplying water to planting media disposed in the first chamber via the first outlet; and supplying water to planting media disposed in the second chamber via the second outlet. The method may include, after inserting planting media, removing the planting media from the housing. The method may include, after removing the planting media, replacing the planting media within the housing. The first panel and the second panel may be structurally configured to engage with and support roots of the one or more plants.

The present teachings may further include a plant support apparatus for a vertical growing system. The plant support apparatus may be structurally configured to hold planting media along a vertical length of a housing, i.e., for growing plants along the vertical length. In certain aspects, two chambers are structurally configured to hold planting media, and are accessible from opposite sides of the housing. The plant support apparatus may also include a blocker disposed along an opening of each chamber, where the blocker is structurally configured to support the plants, to block water from leaving the chamber, and/or to prevent light from entering the chamber. The design of the plant support apparatus may be suitable for cultivating many different types of plants.

In certain aspects, a plant support apparatus for a vertical growing system disclosed herein may include: a housing having a first opening on a first side thereof and a second opening on a second side thereof, the second side opposing the first side, where the housing defines a first chamber accessible through the first opening and a second chamber accessible through the second opening; a plurality of engagement portions within each of the first chamber and the second chamber, the plurality of engagement portions disposed along sidewalls that form side boundaries within each of the first chamber and the second chamber; and one or more panels structurally configured for placement within each of the first chamber and the second chamber, the one or more panels engageable with at least one of the plurality of engagement portions to position and stabilize a panel within its respective chamber, the one or more panels structurally configured to engage with, and support in a substantially fixed position relative to the housing, at least one of (i) a shoot system of a plant and (ii) a support medium containing at least a portion of the plant.

Implementations may include one or more of the following features. The housing may be structurally configured for hanging to facilitate a vertical arrangement of one or more plants along the housing. At least one of the one or more panels may be removable and replaceable within a chamber of the housing. Each of the one or more panels may be removable and replaceable. At least one of the one or more panels may be slidably engageable with at least one of the plurality of engagement portions. The first chamber may include at least two panels, where a first panel of the at least two panels is disposed along or adjacent to the first opening, and where a second panel of the at least two panels is disposed a predetermined distance from the first panel within an interior of the first chamber. The first panel may act as a blocker along the first opening structurally configured to mitigate water from passing from the first chamber to an external environment, and may be structurally configured to engage with, and support, the shoot system of the plant. The second panel may be configured to hold the support medium containing at least a portion of the plant. The support medium may include a plant plug. The first panel and the second panel may have the same shape and may be formed of the same materials. The plant support apparatus may include a third panel disposed a predetermined distance from the second panel within the interior of the first chamber. The third panel may be structurally configured to wick water therethrough for supplying to plants disposed along a length of the housing. At least one of the one or more panels may include a width formed substantially by a material that is resiliently deformable such that the panel can be penetrated by an object, where the material substantially conforms to a shape of the object to hold the object in a fixed position along the panel. The material may include nylon. The one or more panels may be structurally configured to engage with and support roots of the plant. At least two panels may be disposed within a chamber, and the at least two panels may form a vertical pathway therebetween throughout the housing for a fluid to traverse through the housing. The fluid may include at least one of air and water. At least one of the one or more panels may include a width formed substantially by a material structurally configured to wick water throughout a length of the panel. The material may include nylon. An exterior surface of at least one of the one or more panels may be a color that substantially reflects at least 50% of extended photosynthetically active radiation (ePAR) light. The color may be substantially white. At least one of the plurality of engagement portions may include a first channel. At least one of the one or more panels may include a first end portion slidably engageable within the first channel. The first end portion may include a shape having a cross-section shaped substantially complimentary to a corresponding cross-section of a void defined by the first channel. The first end portion may include a rubber material. Bristles may extend from the first end portion. The bristles may include a nylon material. At least one of the plurality of engagement portions may include a second channel disposed across from the first channel, where a first end portion of a panel is slidably engageable within the first channel and a second end portion of the panel is slidably engageable within the second channel. The first end portion may include a material sufficiently rigid to permit slidable positioning along a length of the first channel. The material forming a substantial portion of a width of the panel may include a plurality of bristles, where the second end portion includes terminal ends of at least some of the plurality of bristles. When a panel is engaged with each of the first channel and the second channel, the panel and the second channel may be engaged such that removal of the panel from the second channel is provided by application of a predetermined force. The predetermined force can be provided by power washing the panel. The first chamber and the second chamber may be separated by an interior boundary. The interior boundary may include a plurality of ridges. The plurality of ridges may form fluid pathways along a length of the housing. The plurality of ridges may be structurally configured to engage with roots of the plant. A top of the interior boundary may include an engagement element couplable to a fixture for hanging the housing. The first opening may be sized and shaped to accommodate growth of a plurality of plants across a width thereof.

In certain aspects, a plant support apparatus for a vertical growing system in cooperation with one or more plants and planting media disclosed herein may include: a housing having a first opening on a first side thereof and a second opening on a second side thereof, the second side opposing the first side, and the housing defining a first chamber accessible through the first opening and a second chamber accessible through the second opening, the first chamber and the second chamber structurally configured to hold planting media along a length of the housing and to hold one or more plants in engagement with the planting media in a substantially fixed position relative to the housing; and a blocker disposed along one or more of the first opening and the second opening, the blocker structurally configured to mitigate water from passing from one or more of the first chamber and the second chamber to an external environment, and the blocker structurally configured to engage with, and support, a shoot system of the one or more plants.

Implementations may include one or more of the following features. The plant support apparatus may further include planting media disposed within one or more of the first chamber and the second chamber, the planting media structurally configured for engagement with a root system of the one or more plants, and the planting media structurally configured to allow water to traverse through the planting media from a top end to a bottom end thereof in a controlled manner for absorption by the root system of the one or more plants. The planting media may be a strip of material disposed through a length of the housing. The one or more plants may be engageable with the planting media at a plurality of locations along the length of the housing. The one or more plants may be engageable with the planting media at an angle that intersects a horizontal axis disposed substantially normal to a longitudinal axis disposed through the length of the housing. The angle may be about 45-degrees offset from the horizontal axis. The angle may be oriented toward the ground. The angle may be oriented away from the ground. The planting media may be configured to receive a predetermined amount of water such that the planting media maintains a predetermined saturation level for a predetermined period of time. The planting media may be removable from the housing. The planting media may be replaceable within the housing after being removed. The planting media may include a natural fiber. The planting media may include one or more of wool and nylon. The plant support apparatus may include a second planting media engageable to at least one of the planting media, the blocker, and the housing. The second planting media may include a hydroponic media. The second planting media may include one or more of seeds and roots embedded therein. The blocker may include a plurality of bristles projecting from opposing sides of one or more of the first opening and the second opening. The plurality of bristles may be made of nylon. The blocker may include a shape conforming material. The blocker may be structurally configured to block a predetermined amount of light from entering one or more of the first chamber and the second chamber. The blocker may be removeable from the housing. The housing may be structurally configured for hanging to facilitate a vertical arrangement of the one or more plants along the housing. The housing may include an engagement element disposed on a top end thereof, the engagement element couplable to a fixture for hanging the housing. The engagement element may be configured for coupling with a positioning system. The positioning system may include a rail system. The housing may be manufactured via an extrusion process. The first chamber and the second chamber may each be structurally configured to allow water to traverse therethrough from a top housing end to a bottom housing end.

These and other features, aspects, and advantages of the present teachings will become better understood with reference to the following description, examples, and appended claims.

### BRIEF DESCRIPTION OF THE DRAWINGS

The foregoing and other objects, features and advantages of the devices, systems, and methods described herein will be apparent from the following description of particular embodiments thereof, as illustrated in the accompanying drawings. The drawings are not necessarily to scale, emphasis instead being placed upon illustrating the principles of the devices, systems, and methods described herein. In the drawings, like reference numerals generally identify corresponding elements.
Fig. 1 is a perspective view of a vertical growing system for plants, in accordance with a representative embodiment.
Fig. 2 is a partial end view of the vertical growing system, in accordance with a representative embodiment.
Fig. 3 is a partial top plan view of the vertical growing system, in accordance with a representative embodiment.
Fig. 4 is a perspective view of a plant support apparatus of the vertical growing system in alternate positions, in accordance with a representative embodiment.
Fig. 5 is a partial front perspective view of a vertical growing system for plants, in accordance with a representative embodiment.
Fig. 6 is a top perspective view of the plant support apparatus for a vertical growing system, in accordance with a representative embodiment.
Fig. 7 is a cross-sectional overhead view of the plant support apparatus, in accordance with a representative embodiment.
Fig. 8 is an exploded perspective view of the plant support apparatus, in accordance with a representative embodiment.
Fig. 9 is a cross-sectional overhead view of a housing of the plant support apparatus, in accordance with a representative embodiment.
Fig. 10 is another perspective view of the plant support apparatus, in accordance with a representative embodiment.
Fig. 11 is a partial perspective view of a lighting apparatus for a vertical growing system, in accordance with a representative embodiment.
Fig. 12 is a cross-sectional overhead view of the lighting apparatus, in accordance with a representative embodiment.
Fig. 13 is a cross-sectional overhead view of the lighting support structure, in accordance with a representative embodiment.
Fig. 14 is a partial perspective view of an irrigation system for the vertical growing system, in accordance with a representative embodiment.
Fig. 15 is a partial perspective view of a water supply system and a ventilation system for the vertical growing system, in accordance with a representative embodiment.
Fig. 16 is a plot of photosynthetic photon flux density provided by a vertical growing system, in accordance with a representative embodiment.
Fig. 17 is a flow chart of a method for growing plants in a vertical growing system, in accordance with a representative embodiment.

### DETAILED DESCRIPTION

The embodiments will now be described more fully hereinafter with reference to the accompanying figures, in which preferred embodiments are shown. The foregoing may, however, be embodied in many different forms and should not be construed as limited to the illustrated embodiments set forth herein. Rather, these illustrated embodiments are provided so that this disclosure will convey the scope to those skilled in the art.

All documents mentioned herein are hereby incorporated by reference in their entirety. References to items in the singular should be understood to include items in the plural, and vice versa, unless explicitly stated otherwise or clear from the text. Grammatical conjunctions are intended to express any and all disjunctive and conjunctive combinations of conjoined clauses, sentences, words, and the like, unless otherwise stated or clear from the context. Thus, the term "or" should generally be understood to mean "and/or" and so forth.

Recitation of ranges of values herein are not intended to be limiting, referring instead individually to any and all values falling within the range, unless otherwise indicated herein, and each separate value within such a range is incorporated into the specification as if it were individually recited herein. The words "about," "approximately" or the like, when accompanying a numerical value, are to be construed as indicating a deviation as would be appreciated by one of ordinary skill in the art to operate satisfactorily for an intended purpose. Similarly, words of approximation such as "about," "approximately," or "substantially" when used in reference to physical characteristics, should be understood to contemplate a range of deviations that would be appreciated by one of ordinary skill in the art to operate satisfactorily for a corresponding use, function, purpose, or the like. Ranges of values and/or numeric values are provided herein as examples only, and do not constitute a limitation on the scope of the described embodiments. Where ranges of values are provided, they are also intended to include each value within the range as if set forth individually, unless expressly stated to the contrary. The use of any and all examples, or exemplary language ("e.g.," "such as," or the like) provided herein, is intended merely to better illuminate the embodiments and does not pose a limitation on the scope of the embodiments. No language in the specification should be construed as indicating any unclaimed element as essential to the practice of the embodiments.

In the following description, it is understood that terms such as "first," "second," "top," "bottom," "up," "down," and the like, are words of convenience and are not to be construed as limiting terms unless specifically stated to the contrary.

In general, the devices, systems, and methods disclosed herein generally relate to vertical growing systems for plants, and more specifically to vertical growing systems for plants in a hydroponic setting. That is, the present teachings may be used in the field of hydroponics, which will be understood to be a type of horticulture that involves growing plants without soil, e.g., by using water-based mineral nutrient solutions in aqueous solvents. In a hydroponic system, terrestrial and/or aquatic plants may grow with their roots exposed to a nutritious liquid, e.g., where the roots are mechanically supported by an inert medium such as perlite, natural fibers, and/or other substrates. However, while this disclosure may emphasize the use of the present teachings in the field of hydroponics, it will be understood that the present teachings may be adapted for use in other growing systems. Thus, generally it should be understood that the present teachings can be adapted for use with almost any vertical growing system, hydroponic or otherwise.

The devices, systems, and methods disclosed herein may be designed and/or structurally configured for relatively high production yields of one or more types of plants within a given growing space. This may be particularly advantageous for plants that are grown and harvested for consumption. In this manner, the present teachings may be advantageous for use in growing edible leafy greens such as lettuce, spinach, beets, cabbage, quinoa, endive, carrots, arugula, fennel, watercress, and so on. Also or instead, aspects of the present teachings may be suitable and/or advantageous for growing other plants, which may include one or more of the following by way of example: flowering plants (e.g., lavender), potatoes or other root vegetables and/or tuber plants, vines (i.e., plants with a growth habit of trailing or scandent stems, lianas, or runners, such as grapes, tomatoes, and the like), hemp plants, tobacco, cactus, mushrooms or other fungi, and so on. It will thus be understood that aspects of the present teachings may be suitable and/or advantageous for growing virtually any rooted plants, with the possible exception of trees and bushes.

To achieve relatively high production yields, certain embodiments of the present teachings include one or more vertically oriented plant support apparatus that may be supported on an overhead support structure. In some cases, no additional support is needed (e.g., the plant support apparatus may be fully supported by an overhead support structure, which can reduce a footprint of the overall system). By reducing, or eliminating, the space requirements for additional supports, an overhead support structure may further increase available space for cultivation.

In general, a system according to the present teachings may include one or more of the following: a plant support apparatus, a lighting apparatus, an irrigation system, and a climate-control system (e.g., one or more facets of a heating, ventilation, and air conditioning (HVAC) system), such as a cooling system and/or a ventilation system. Each of these components-either individually or collectively with another component-may facilitate some of the advantages of the present disclosure such as increased plant yield, cost savings, space savings, transparency in the growing/harvesting processes, less waste, ease of use, and so on.

A plant support apparatus according to the present teachings may include two or more chambers oriented along a vertical length of a housing, which may improve space utilization relative to existing growing arrangements (e.g., vertical stacks of trays or pallets). Moreover, by isolating the chambers from one another within the housing, multiple different plant types may be grown in a given plant support apparatus. For example, plants having different water requirements may be housed in separate, adjacent chambers in a single housing. And, by orienting the chambers on opposing sides of the housing, plants with different lighting requirements may also, or instead, be grown in the same plant support apparatus (e.g., different lighting conditions may be provided on each of the opposing sides of the housing).

The present teachings may further include one or more lighting apparatus that may be arranged vertically and may be generally located adjacent to a plant support apparatus. In some embodiments, the lighting apparatus may be supported on an overhead support structure, which may be the same overhead support structure that supports the plant support apparatus, or it may be interconnected therewith, or it may be distinct therefrom. In some cases, no additional support may be needed (e.g., the lighting apparatus may be fully supported by the overhead support structure), thereby further increasing space available for cultivation. Certain embodiments may use one or more light sources (e.g., light-emitting diodes (LEDs) or the like) that are arranged to provide a relatively wide and uniform light canopy. Such a design, coupled with a relatively low heat output by the light source of certain embodiments, may allow the lighting apparatus to be located in relatively close proximity to the plant support apparatus, even further condensing the space requirements of the system. In addition, the lighting apparatus may include structural features that are structurally configured to facilitate relatively high airflow and/or to otherwise mitigate heat transfer to an adjacent plant support apparatus containing plants that may be relatively sensitive to heat.

In certain embodiments, the vertical growing system may include additional functional systems desired for a particular growing environment, such as a cooling system, a ventilation system, a heating system, an irrigation system, a control system, a positioning system, and/or an electrical system. Structural elements of any or all such systems may be supported on the overhead support structure that is used for one or both of the plant support apparatus or lighting apparatus, or a separate overhead support structure. In this manner, the vertical growing system may include many or all of the utilities needed for a growing operation in a relatively compact space.

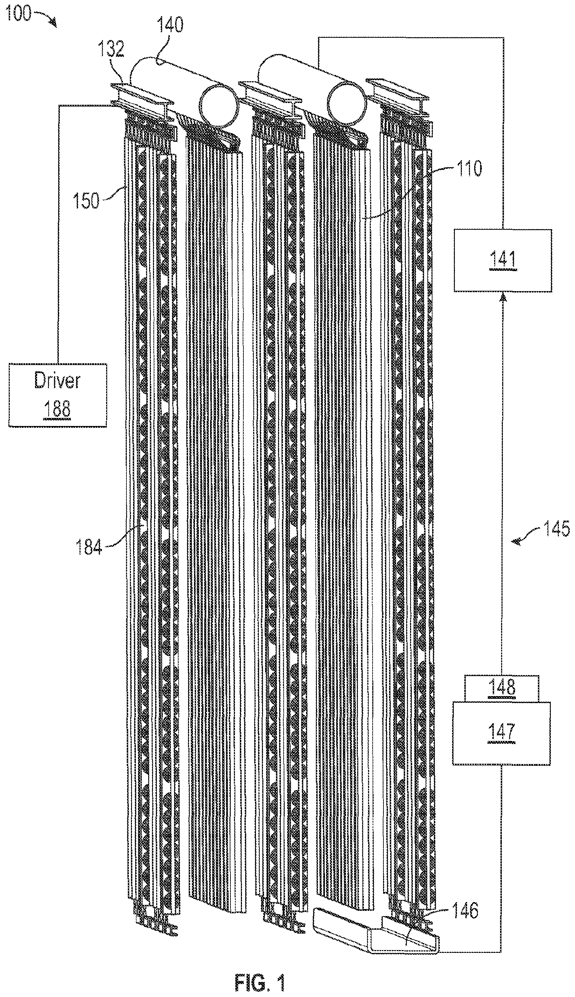

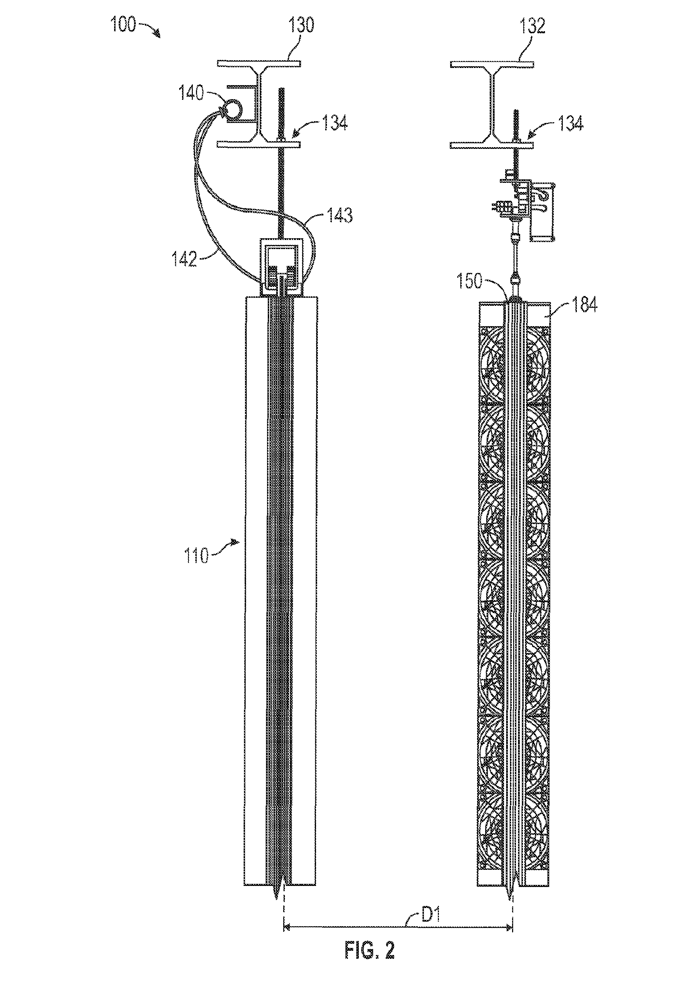

Figs. 1 and 2 show perspective and partial end views, respectively, of a vertical growing system for plants, in accordance with a representative embodiment. The vertical growing system 100 may include one or more plant support apparatus 110, one or more overhead support structures (e.g., a first overhead support structure 130 and a second overhead support structure 132), one or more lighting apparatus 150, an HVAC system 184 (which will be understood to include one or more of a heating system, a ventilation system-such as an air circulation system or other air movement system-and a cooling system), and an irrigation system 145 (which may, for example, include a water source 141, a water supply line 140, a first outlet 142, a second outlet 143, a trough 146, a reservoir 147, and other features such as those discussed below).

The plant support apparatus 110 may include a housing having one or more chambers structurally configured to hold planting media. For example, in an implementation, a plant support apparatus 110 includes two chambers (a first chamber and a second chamber) disposed on opposite sides of the housing, where the plant support apparatus 110 is structurally configured to facilitate growing plants (e.g., different types of plants or the same type of plant) on opposite sides of the housing. The plant support apparatus 110 may be supported within the system 100 in a generally vertical orientation (e.g., a major dimension of the plant support apparatus 110 may be vertically oriented, and/or a vertical axis extending through a length of the plant support apparatus 110 may be vertically oriented such as by being substantially perpendicular to the ground or floor of a growing space). Similarly, each chamber of the plant support apparatus 110, and/or the opening to each chamber, may extend along a vertical dimension of the housing. The plant support apparatus 110 may be structurally configured to cooperate with planting media for growing plants therein (e.g., planting media may be disposed within one or more of the chambers of the housing). In certain embodiments, the plant support apparatus 110 may be supported by hanging from an overhead support structure (e.g., the first overhead support structure 130).

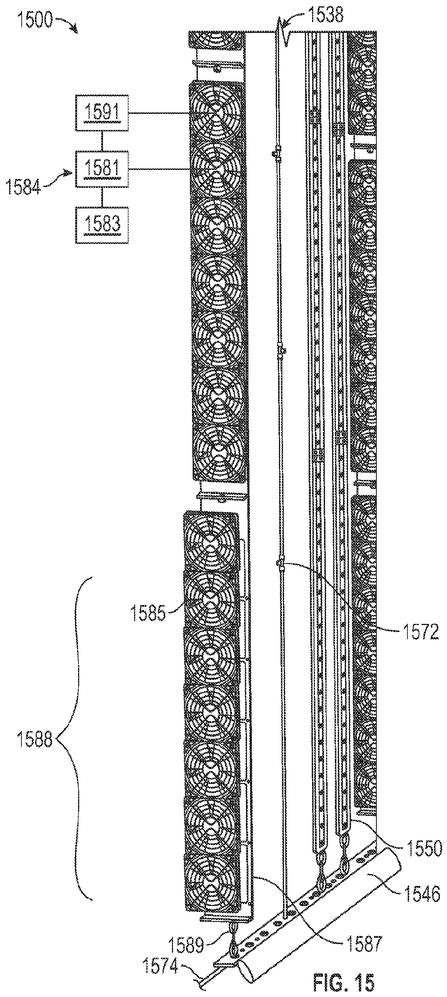

The overhead support structures (e.g., the first overhead support structure 130 and/or the second overhead support structure 132) may be any structure configured to support one or more of the plant support apparatus 110 and the lighting apparatus 150. The plant support apparatus 110 or the lighting apparatus 150 may be supported from an overhead support structure, for example, by hanging, mounting with fasteners (e.g., fasteners 134 shown in Fig. 2), or the like. In some cases, the overhead support structure may include one or more rails, and the supported apparatus may include an engagement element configured for coupling with the one or more rails. Thus, in this manner, the overhead support structure may be part of, or may cooperate with, a positioning system for moving one or more of the components of the system 100 such as the plant support apparatus 110 and/or the lighting apparatus 150. In some aspects, one or more of the plant support apparatus 110 and the lighting apparatus 150 is tethered to a fixture such as a floor, a ceiling, a wall, an overhead support structure (e.g., the first overhead support structure 130 and/or the second overhead support structure 132), and so on. Further, such a tether may be substantially elastic (and/or biased via a spring force or the like), thus allowing for predetermined flexibility in movement of the plant support apparatus 110 and/or the lighting apparatus 150. For example, one or more of the plant support apparatus 110 and the lighting apparatus 150 may be tethered to a structure via an engagement coupler (e.g., the engagement coupler 1589 of Fig. 15), which may include a rubber band or the like. The tether may bias such elements toward a desired position while allowing predetermined movement away from the desired position under certain forces. This feature can be advantageous for allowing for a person and/or equipment to traverse through a system 100 with relatively tightly-spaced components-e.g., permitting movement away from an intended position and a return to the intended position via a biasing force and/or other force such as gravity.

In the shown embodiment, the first overhead support structure 130 and the second overhead support structure 132 are arranged offset from one another and generally parallel to one another. The system 100 may include a plurality of each of the first overhead support structure 130 and the second overhead support structure 132, such as in the alternating pattern shown in the figure. For example, the shown embodiment includes three of the second overhead support structures 132 alternating with two of the first overhead support structures 130, although it will be understood that more or fewer of these overhead support structures may be used in a particular application. In the shown example, the lighting apparatus 150 is located approximately 12 inches (about 30.48 cm) away from the plant support apparatus 110. In other embodiments, the first overhead support structure and the second overhead support structure may be the same structure or may together comprise a single structure; for example, the lighting apparatus 150 may be disposed adjacent to the plant support apparatus 110 on the same support structure.

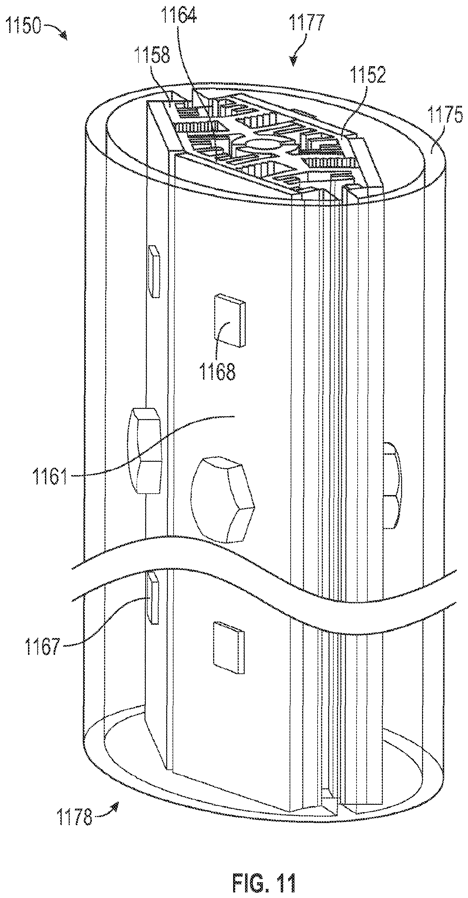

The lighting apparatus 150 may include one or more lighting support structures that include engagement regions having mounting surfaces for coupling one or more light sources thereto (see, e.g., the first mounting surface 1158 and second mounting surface 1164 of the lighting apparatus 1150 of Fig. 11). The lighting apparatus 150 may be disposed adjacent to the plant support apparatus 110 so that plants supported in the plant support apparatus 110 are generally facing the light source. And, in certain implementations, because of features of the system 100 (e.g., the structure of one or more of the plant support apparatus 110 and the lighting apparatus 150), the lighting apparatus 150 may be disposed in relatively close proximity to the plant support apparatus 110. For example, in some aspects, a lighting apparatus 150 may be located as close as about 3 inches (about 7.62 cm) or less from a plant supported by a plant support apparatus 110. Also or instead, aspects of the present teachings may include other distance arrangements such as: where the distance D1 between a lighting apparatus 150 and a plant support apparatus 110 is about 15 inches (about 38.1 cm) (e.g., measured from a centerline of these elements); where there is about a 6 inch (about 15.24 cm) gap between a lighting apparatus 150 and a plant support apparatus 110 (or between a lighting apparatus 150 and a plant supported by a plant support apparatus 110); and so on. It will thus be understood that a plurality of spacing arrangements are possible, where such spacing arrangements can be specifically tailored for certain lights, plants, and/or growing facilities. Furthermore, the distances between two or more lighting apparatus 150 and the distances between two or more plant support apparatus 110 may be configurable as desired. For example, in an aspect, a distance between two lighting apparatus 150 is about 6 inches (about 15.24 cm). Moreover, the number or ratio of the plant support apparatus 110 relative to the lighting apparatus 150 may be configurable using the present teachings. For example, in an aspect there may be one lighting apparatus 150 for every plant support apparatus 110; in another aspect, there may be multiple lighting apparatus 150 for every plant support apparatus 110 (e.g., two lighting apparatus 150 for every plant support apparatus 110); in yet another aspect, there may be one lighting apparatus 150 for a plurality of plant support apparatus 110 (e.g., one lighting apparatus 150 for every set of two plant support apparatus 110); and where other numbers or ratios are possible.

One or more of the lighting apparatus 150 may be supported from a second overhead support structure 132 (e.g., the lighting apparatus 150 may hang from the second overhead support structure 132). The lighting apparatus 150 may be supported from the second overhead support structure 132 in a generally vertical orientation (e.g., a major dimension of lighting apparatus 150 may be vertically oriented).

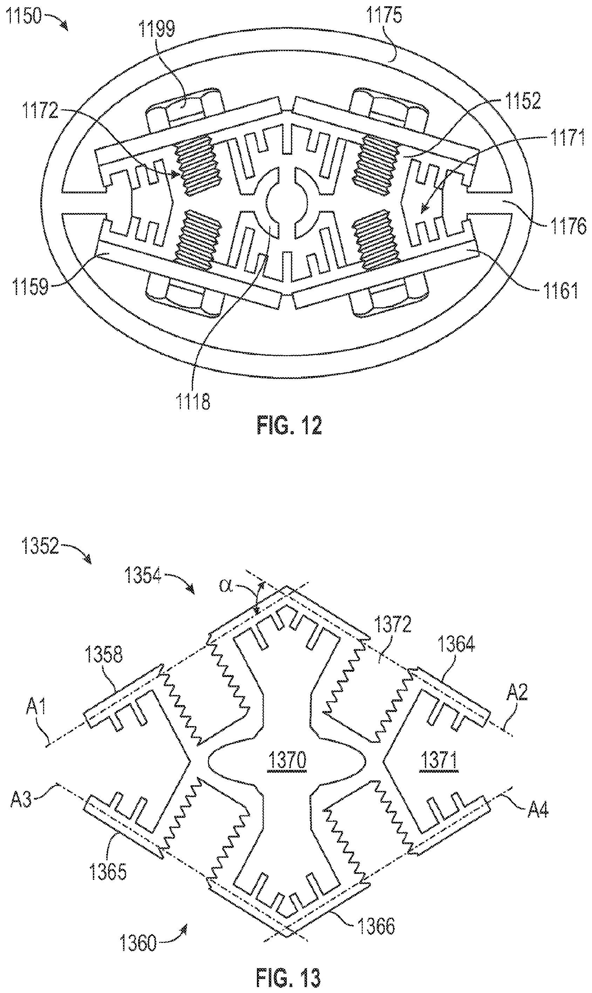

Each lighting support structure of the lighting apparatus 150 may include at least two mounting surfaces that collectively form a substantially V-shaped side (e.g., a V-shaped structure may be formed on the side of the lighting apparatus 150, as shown and discussed below with reference to Fig. 13). This configuration may allow for placement of a relatively large number of light sources in a given space, and may provide improved canopy spread relative to existing lighting solutions. Furthermore, in certain embodiments, each lighting support structure of the lighting apparatus 150 may include at least two substantially V-shaped structures (e.g., on opposing sides of the lighting apparatus 150), which can allow the lighting apparatus 150 to provide illumination to multiple plant support apparatus 110 (e.g., a plant support apparatus 110 located on either side of the lighting apparatus 150).

The lighting apparatus 150 may further include one or more drivers 188 for controlling power supplied to the light source(s) coupled to the lighting apparatus 150. This exemplary lighting apparatus 150 is structurally configured to create a wide canopy with no hot spots, all while being about 12 inches (about 30.48 cm) away from the plants or closer (e.g., 6 inches (15.24 cm) away or closer). To this end, one or more electrical drivers 188 may be located remotely from the lighting apparatus 150, and/or the lighting support apparatus 150 may be structurally configured to pass heat from those or other heat-producing elements through interstitial spaces thereof, as described herein. More specifically, the driver 188 may be electrically coupled to at least one light source, and may provide, or be connected to, additional hardware and/or software to provide functionality such as: power switching, providing a light cycle (e.g., via timers), light source dimming, heat sensing, photometric sensing, and the like. It may be beneficial for a driver 188 (e.g., some or all of the drivers 188, of which there may be a plurality, such as one or multiple drivers for every lighting apparatus 150) to be located remotely from the lighting support structures to mitigate heat transfer to the lighting support structures and/or the plant support apparatus 110 and plants. For example, the drivers 188 may be located on or above the overhead support system and/or in an area remote from the system 100 or specific components thereof.

The HVAC system 184 may include one or more of a heating system, a ventilation system, and a cooling system. As such, the HVAC system 184 may include various components such as blowers, chillers, thermostats or other sensors, controllers, ducting, etc. In embodiments, one or more of a cooling system and a ventilation system are at least partially located above the lighting apparatus 150. For example, one or more of the cooling system and the ventilation system may be located above one or more of the first overhead support structure 130 and the second overhead support structure 132. In addition, in certain cases, the HVAC system 184 (e.g., a cooling system) may be structurally configured to create a flow of air through one or more of the lighting support structures (e.g., with a blower or other forced air mechanism). The HVAC system 184 may also or instead be located between rows of plant support apparatus 110 (or have portions thereof disposed between rows), to promote airflow between the plants and/or portions of the plant support apparatus 110 (see, e.g., discussion of Fig. 15).

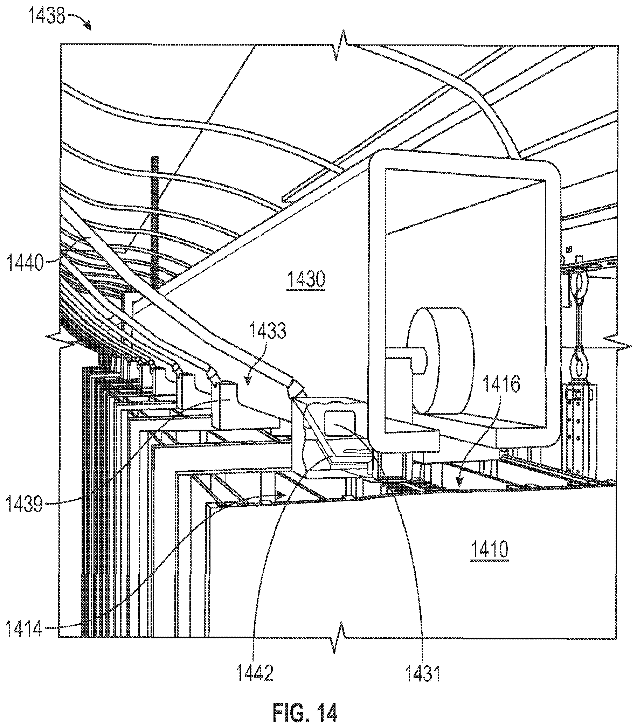

The irrigation system 145 may include water supply equipment, such as one or more pumps, supply lines, drip lines, reservoirs, etc.; fluid control devices, e.g., valves, regulators, timers, and the like; systems for applying fertilizer, nutrients, feed, other chemicals, and/or other plant treatments; and/or water reclaim devices, e.g., troughs, filters, pumps, and the like. Certain embodiments of the system 100 include a reclaim irrigation system for collecting water that drains from the plant support apparatus 110, and for recycling some or all of the collected water back into the irrigation supply. Use of a reclaim irrigation system may significantly reduce total water consumption by the system 100. Components of the irrigation system 145 may be located above, or may be supported by, one or more of the overhead support structures. In embodiments, the irrigation system 145 may have one or more outlets (e.g., the first outlet 142 and the second outlet 143, which may be drip lines or the like) positioned above the plant support apparatus 110 for supplying water to the planting media disposed in the plant support apparatus 110. Furthermore, some embodiments include one or more outlets positioned above each chamber of the plant support apparatus 110, which can advantageously allow for independent control of the irrigation of each chamber (e.g., as discussed with reference to Fig. 14). The first outlet 142 and the second outlet 143 may be in fluid communication with one or more of the water supply lines 140 for supplying water to the planting media disposed in the plant support apparatus 110, or another portion of a planting system.

The water source 141 may include, or may be connected with, a water supply system of a growing facility, and/or may include water delivery components thereof. For example, the water source 141 may include devices such as one or more pumps, reservoirs, fluid control devices, water treatment devices, and the like. Furthermore, while the term "water" may be used herein in the context of irrigation systems, it is to be understood that "water" in this context can encompass one or more substances for delivery to plants being grown in systems similar to those described herein. Such substances may include water, but may also or instead include fertilizer, nutrients, feed, other chemicals, and/or other plant treatments.

The water supply line 140 may include one or more pipes, hoses, or the like for supplying water to the plant support apparatus 110. The water supply line 140 may be in fluid communication with the water source 141 (e.g., the water supply line 140 may be connected, either directly or via one or more intermediate plumbing components, to the water source 141). The water supply line 140 may be positioned above the plant support apparatus 110 for supplying water to the planting media and/or plants disposed therein. In certain embodiments, the system 100 may include one or more outlets (e.g., drip lines, misters, emitters, or the like) in fluid communication with the water supply line 140.

The irrigation system 145 may include a reclaim irrigation system structurally configured for collecting water that drains from the plant support apparatus 110, and for recycling some or all of the collected water back into the irrigation supply (e.g., water may be recycled back to the water source 141). In this manner, a reclaim irrigation system may significantly reduce the total amount of water consumed by the system 100, as compared to a similar system without reclamation. The reclaim irrigation system may include the trough 146, the reservoir 147, and other devices such as pumps, flow control devices (e.g., valves, flow restrictors, and the like), plumbing fittings and/or fixtures, or the like.

The trough 146 may be structurally configured to collect water that passes through the plant support apparatus 110 (e.g., water may pass through a length of one or more of a first chamber and a second chamber thereof). The trough 146 may be disposed in a location convenient for collecting water that passes through the plant support apparatus 110, for example, the trough 146 may be disposed beneath the plant support apparatus 110. The trough 146 may be in fluid communication with the reservoir 147. In some cases, the trough 146 may be pitched toward the reservoir 147, so that some or all of the water collected in the trough may drain by gravity toward the reservoir 147. Also, or instead, the trough 146 may be disposed on, integral with, or itself may form a floor system (with appropriate drainage) for a growing system such as those described herein.

The reservoir 147 may be in fluid communication with one or more components of the system 100 for purposes of recycling water collected in the reservoir 147. For example, the reservoir 147 may be in fluid communication with the trough 146, the water source 141, the water supply line 140, one or more pumps 148, and/or one or more filters, flow control devices, or the like. In one or more embodiments, the reservoir 147 may be in fluid communication with a pump 148 that may be structurally configured to move water from the reservoir 147 to one or more of the water supply line 140 and the water source 141.

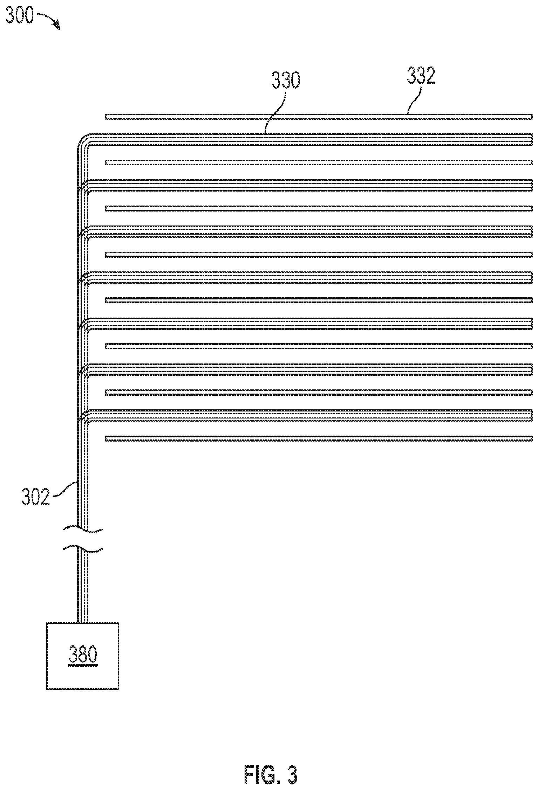

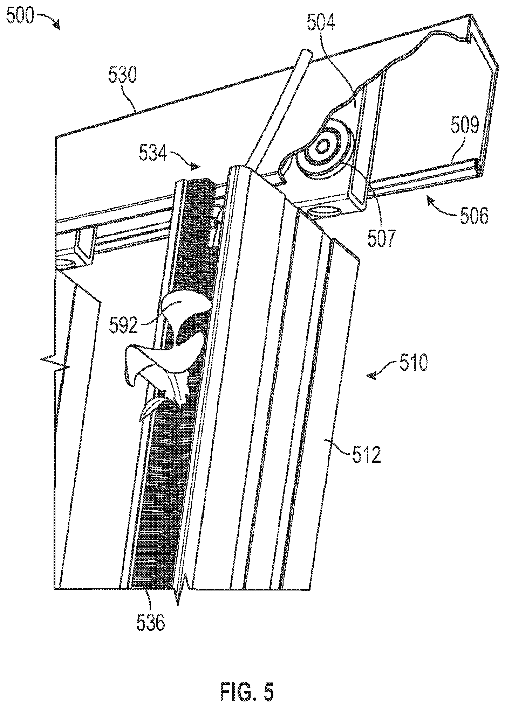

Fig. 3 shows a partial top plan view of a vertical growing system 300, in accordance with a representative embodiment. The vertical growing system 300 may generally include one or more overhead support structures (e.g., a first overhead support structure 330 and/or a second overhead support structure 332), where it will be understood that one or more of these components may be the same or similar to any corresponding components described herein, e.g., with reference to the system 100 of Figs. 1 and 2. Further, the vertical growing system 300 may also include additional components described in the system 100 of Figs. 1 and 2, which may be omitted from Fig. 3 for clarity. And, more generally, it shall be understood that specific components of vertical growing systems and techniques/details related thereto described in this disclosure may be included in any of the systems and methods described elsewhere herein unless otherwise noted or clear from the context, and vice-versa. Thus, by way of example, any one or more features of the plant support apparatus described with reference to Figs. 5-10 may be included in the systems of any of Figs. 1-3, and any features of the systems of any of Figs. 1-3 may similarly be included in the plant support apparatus described with reference to Figs. 5-10 and/or a system including such a plant support apparatus as described with reference to Figs. 5-10.

Turning back to Fig. 3, in the shown embodiment, the overhead support structures (e.g., first overhead support structures 330 and second overhead support structures 332) may be arranged offset from one another and generally parallel to one another. The overhead support structures may include a rail, and may be connected to a header 302 by the rail. Header 302 may include a rail or another structure configured to interface with rails of the overhead support structures. In this manner, the plant support apparatus (e.g., a plant support apparatus 110 as described above with reference to Figs. 1 and 2) supported on the first overhead support structure 330 may be movable along the rail. For example, the plant support apparatus may be moved on the rail along the first overhead support structure 330, onto the header 302, and into a remote location 380, such as a location suitable for planting, harvesting plants, cleaning or maintaining the plant support apparatus and/or plants, combinations thereof, or similar. In other embodiments, the second overhead support structure 332 may also or instead include a rail, and the lighting apparatus may be movable along the rail (e.g., onto the header 302 and into the remote location 380).

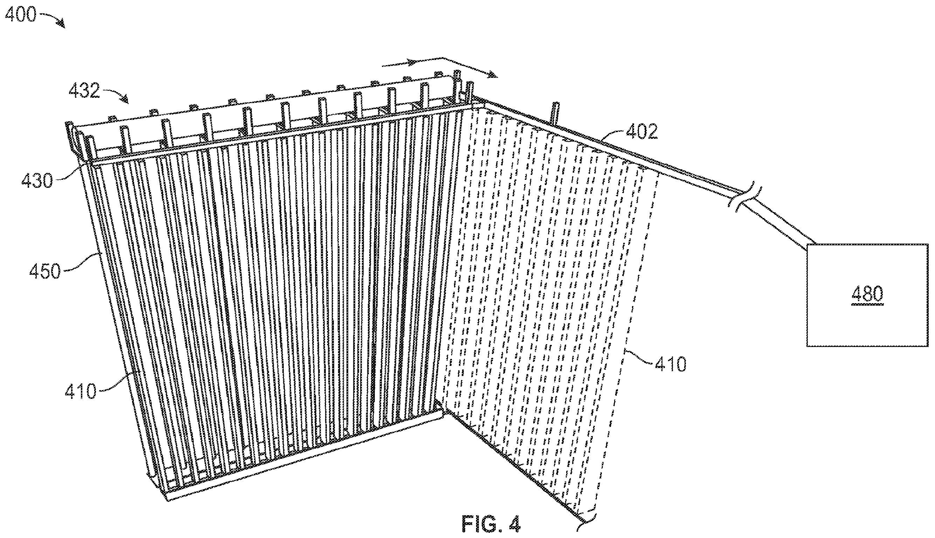

Fig. 4 shows a perspective view of a vertical growing system 400 with one or more plant support apparatus 410 in alternate positions, in accordance with a representative embodiment. The vertical growing system 400 may feature any of the components described herein. In particular, shown in the figure are a first overhead support structure 430 supporting a plurality of plant support apparatus 410, a second overhead support structure 432 supporting a plurality of lighting apparatus 450, and a header 402, where any of these components may be the same or similar to corresponding components described elsewhere herein.

As described herein, either or both of the first overhead support structure 430 or the second overhead support structure 432 may include a rail, e.g., for moving one or more components supported thereon along the rail. In this figure, the plant support apparatus 410 are shown supported on the first overhead support structure 430 that includes a rail. The first overhead support structure 430 is shown connected to the header 402, and plant support apparatus 410 may be moveable along the rail of the first overhead support structure 430 onto the header 402. For example, the plant support apparatus 410 may be moveable from a first position shown in solid lines to a second position shown in dashed lines (e.g., along the directional arrow of Fig. 4). The plant support apparatus 410 may also or instead be moveable to positions between the illustrated positions and/or to positions further along the header 402 (e.g., to a remote location 480, similar to the remote location 380 discussed with reference to Fig. 3). It will be understood that the lighting apparatus 450 may also or instead be movable along a rail to the header 402 in a manner similar to that described for the plant support apparatus 410.

The header 402 may include a rail and may further include rail couplers or other hardware required to interface the rail of the header 402 with rails of the one or more overhead support structures. In some aspects, the header 402 is merely a continuation of the rail.

Thus, Fig. 4 illustrates an example of the motion of the plant support apparatus 410 along the rail from the first overhead support structure 430 to the header 402. The illustrated motion of the plant support apparatus 410 may be reversed; said another way, the plant support apparatus 410 may also or instead be moveable along the rail from the header 402 to first overhead support structure 430. The first overhead support structure 430 may thus include one or more motion drivers, coupling mechanisms, and/or other hardware to move the plant support apparatus 410 along the rail. For example, the first overhead support structure 430 may include hardware for coupling to header 402, or it may include the header 402. The second overhead support structure 432 and the lighting apparatus 450 are shown in a fixed position in these views; however, as discussed above, the lighting apparatus 450 may also or instead be moveable in a similar manner, *mutatis mutandis*, to that described for the plant support apparatus 410.

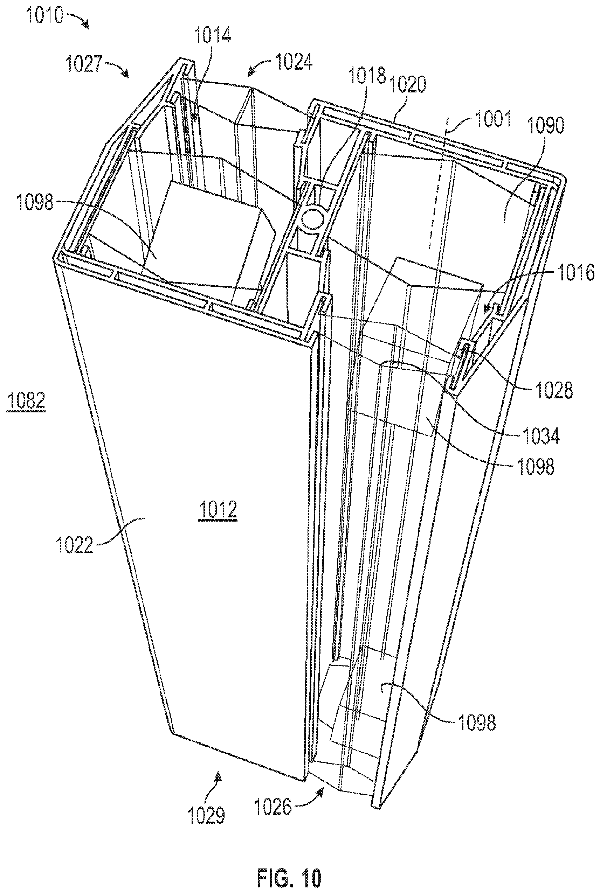

Fig. 5 is a partial perspective view of a vertical growing system 500 for plants 592, in accordance with a representative embodiment. The vertical growing system 500 may generally include one or more overhead support structures (e.g., a first overhead support structure 530) supporting one or more plant support apparatus 510. The plant support apparatus 510 and the overhead support structure 530 may include any of the features of a plant support apparatus and an overhead support structure described elsewhere herein, and may further cooperate with, or be included as components of, any of vertical growing systems described herein. In particular, the plant support apparatus 510 includes a housing 512, a blocker 534, and is shown supporting a plant 592, where any of these components may be the same or similar to corresponding components described elsewhere herein. The plant support apparatus 510 is shown with the blocker 534 disposed along an opening of the housing 512. The plant 592 may be planted in the plant support apparatus 510 by inserting the plant 592 through the blocker 534 and into planting media generally located behind the blocker 534 (see, e.g., planting media 1090 behind blocker 1034 of Fig. 10).

The overhead support structure 530 may include a positioning system 506, such as, for example, the positioning system described with reference to Fig. 4. The positioning system 506 may include one or more rails 509. A fixture 504 coupling the plant support apparatus 510 to the positioning system 506 may include one or more rollers 507 configured to engage with the rail 509. In this embodiment, the plant support apparatus 510 may be positioned at various points along the overhead support structure 530 by the positioning system 506, which is operable to move the fixture 504 along the rail 509.

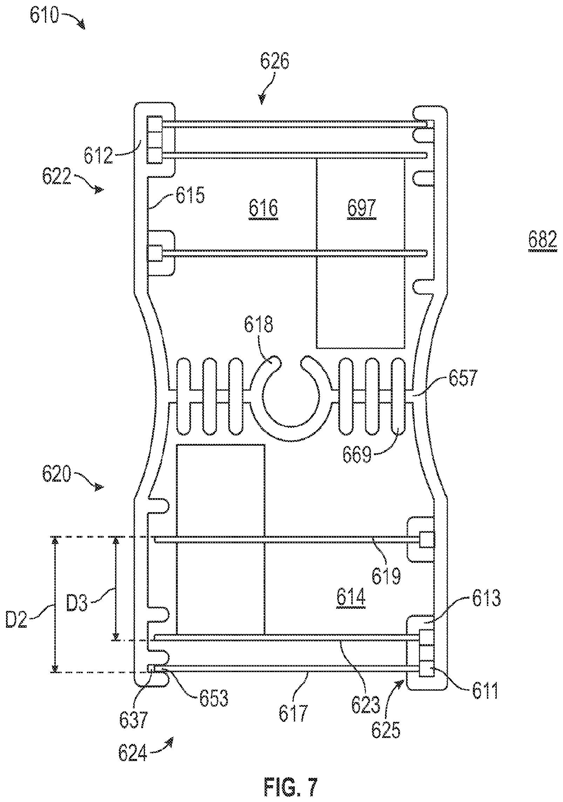

In particular, the overhead support structure 530 is shown engaged with the plant support apparatus 510. In the shown embodiment, the plant support apparatus 510 may include an engagement element (e.g., which may be the same or similar to the engagement element 618 of Fig. 7, or other engagement elements described herein) disposed on a top end of the housing 512. The engagement element may be coupled to the fixture 504 for hanging the plant support apparatus 510 from the overhead support structure 530.

The plant support apparatus 510 may include one or more blockers 534 (which may be similar to the blocker 1034 discussed with reference to Fig. 10) shown disposed in an opening of the housing 512. The blockers 534 are structurally configured to support the plants 592, a portion thereof, and/or to engage with a plant plug (e.g., plant plug 1098 of Fig. 10) The blocker 534 may also mitigate infiltration of certain contaminants into a chamber of the plant support apparatus 510. A blocker may, for example, be disposed along an opening of each chamber (e.g., extending along the vertical length of the opening). In an exemplary configuration, the blocker 534 may include a plurality of bristles 536 which can, in some aspects, project inwardly, generally toward a center of the opening. The bristles 536 may be structurally configured for a plant to project therethrough, and be supported thereby. For example, the plurality of bristles 536 may engage with a plant plug. The bristles 536 may also or instead be structurally configured to support a portion of a plant 592, such as its stem or the like. Also or instead, the blocker 534 may function to block water or another substance from leaving the chamber, prevent light from entering the chamber, and/or to prevent other contaminants or undesired substances or pests from entering the chamber.

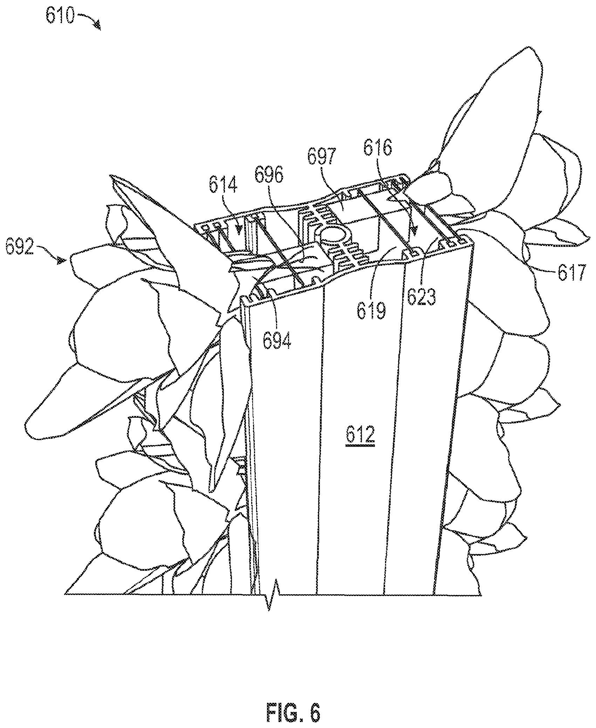

Figs. 6-8 show a perspective view, a cross-sectional overhead view, and an exploded perspective view, respectively, of a plant support apparatus 610 for a vertical growing system (e.g., the vertical growing system 100 of Figs. 1-2), in accordance with a representative embodiment. The plant support apparatus 610 may include a housing 612 that defines a first chamber 614 and a second chamber 616; a plurality of engagement portions 613; and one or more panels (e.g., a first panel 617, a second panel 619, and/or a third panel 623) structurally configured for placement within one or more of the first chamber 614 and the second chamber 616. The plant support apparatus 610 may also, or instead, include features described elsewhere herein (and vice-versa), such as with reference to the any of the plant support apparatus 510 or 1010 of Figs. 5 or 10, respectively.

The housing 612 as shown has a length oriented in a substantially vertical direction, e.g., the housing 612 may be vertically oriented such as by being substantially perpendicular to the ground or floor of a growing space. It will be understood that the cross-section of the housing 612 shown in Fig. 7 may be formed (e.g., by an extrusion process) to any desired length of the plant support apparatus 610. The housing 612 may have a first opening 624 on a first side 620 and a second opening 626 on a second side 622 (as seen, e.g., in Fig. 7). The housing 612 may define a first chamber 614 accessible through the first opening 624 and a second chamber 616 accessible through the second opening 626. The two chambers may be accessible from opposite sides of the housing (e.g., the first side 620 may be located opposing the second side 622). In this manner, and as shown in Fig. 1, the first side 620 and the second side 622 of the housing 612 may be oriented to face different rows of lighting apparatus 150 and an HVAC system 184, thereby enabling each side of the housing 612 to be exposed to different growing conditions (e.g., lighting and ventilation). As shown, the first chamber 614 and the second chamber 616 may be disposed back-to-back; in other aspects, however, the first chamber 614 and the second chamber 616 may be disposed offset from one another, such as having a similar configuration to that shown in Fig. 10.

The plurality of engagement portions 613 may be disposed along sidewalls 615 of the housing 612. The sidewalls 615 may form side boundaries within each of the first chamber 614 and the second chamber 616. In some cases, engagement portions 613 may be unitarily formed with the housing 612. In other cases, engagement portions 613 may be connected to the housing 612, for example, with mounting hardware or the like. At least one of the engagement portions 613 may include a first channel 625. The first channel 625 may be structurally configured for slidable engagement with at least a portion of one of the panels. At least one of the engagement portions 613 may include a second channel 637 disposed across from the first channel 625. The second channel 637 may be structurally configured for slidable engagement with another portion of one of the panels (e.g., a first end portion 611 of a panel may be slidably engageable within the first channel 625 and a second end portion 653 of the same panel may be slidably engageable within the second channel 637).

One or more panels (e.g., a first panel 617, a second panel 619, and/or a third panel 623) may be structurally configured to engage with, and support in a substantially fixed position relative to the housing 612 (e.g., along a vertical length of the housing 612), at least one of (i) a shoot system 694 of a plant 692 and (ii) a support medium 697 containing at least a portion of the plant 692. For example, and as shown in Fig. 6, the first panel 617, the second panel 619, and the third panel 623 may all be engaged within the first chamber 614 of the housing 612. A support medium 697 supporting the plant 692 (e.g., where the support medium 697 may include, or may be, a plant plug as described elsewhere herein) may be passed through the first panel 617 and the third panel 623, and may be inserted into the second panel 619 which may be configured to hold the support medium 697 (e.g., hold the support medium 697 in the position in which it is inserted along the length of the housing 612).

One or more panels may be engageable with at least one of the plurality of engagement portions 613 (e.g., by sliding the panel into one or more of the engagement portions). In this way, the engagement portions 613 may position and stabilize the panel within its respective chamber. At least one of the panels may be removable and replaceable within a chamber of the housing, as may be desired for cleaning the panel, replacing a worn out panel, exchanging for a panel of a different type, or the like. In some cases, each of the panels (e.g., the first panel 617, the second panel 619, and the third panel 623) may be removable (e.g., in a nondestructive manner) and replaceable for re-use.

In an exemplary case, the first chamber 614 may include two panels: a first panel 617 that may be disposed along or adjacent to the first opening 624, and a second panel 619 that may be disposed a predetermined distance (e.g., distance D2) from the first panel 617 within an interior of the first chamber 614. For example, the distance D2 may be about half of a depth of the first chamber 614, as may be desirable to provide even support to the root system 696. The first panel 617 may act as a blocker along the first opening 624-for example, the first panel 617 may be structurally configured to mitigate water from passing from the first chamber 614 to an external environment 682. In this manner, the first panel 617 may include any of the features of a "blocker" as described herein, and any "blockers" described herein may include any of the features of the first panel 617. The second panel 619 may be structurally configured to engage with, and support, the shoot system 694 of the plant 692 and/or the root system 696 of the plant. The second panel 619 may also, or instead, be configured to hold a support medium 697 containing at least a portion of the plant 692 (e.g., the support medium 697 may contain a portion of the root system 696 of the plant 692).

In another exemplary case, the first chamber 614 may include three panels: the first panel 617 configured to act as a blocker and the second panel 619 configured to engage with the support medium in a manner as described above, and the third panel 623 disposed a predetermined distance (e.g., D3) from the second panel 619 within the interior of the first chamber 614. In some cases, it may be desirable to minimize the distance D3 while still allowing sufficient space for the corresponding engagement portions 613. The third panel 623 may be structurally configured to wick water therethrough for supplying to plants 692 disposed along the length of the housing 612. It will be understood that, also or instead, any of the panels (e.g., the first panel 617, the second panel 619, and the third panel 623) may be structurally configured to wick water therethrough for supplying to plants 692 disposed along the length of the housing 612. Further, it will be understood that any features of the one or more panels described herein may also or instead be included on other panels-for example, features of the first panel 617 may also or instead be included on the second or third panels, features of the second panel 619 may also or instead be included on the first or third panels, and features of the third panel 623 may also or instead be included on the first or second panels.

The second chamber 616 may include one or more panels which may be arranged in the same manner, or in a different manner, as the arrangement of panels in the first chamber 614. For example, the first chamber 614 may include three panels and the second chamber 616 may include two panels, or vice-versa; the first chamber 614 and the second chamber 616 may each include one, two, three, or more panels. In embodiments, at least two panels are disposed within a chamber (e.g., the first chamber 614 and/or the second chamber 616), and the two panels form a vertical pathway therebetween throughout the housing 612 for a fluid (such as air or water) to traverse through the housing 612 (e.g., along a vertical length of the housing 612).

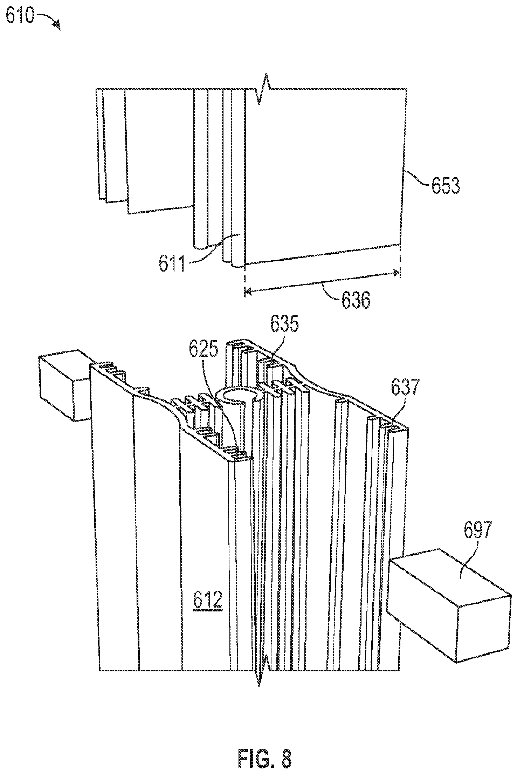

One or more of the panels, such as the first panel 617 and the second panel 619, may have the same shape and/or may be formed of the same materials. At least one of the panels may include a first end portion 611 that is slidably engageable within at least one of the engagement portions 613 (e.g., the first end portion 611 may be engageable in the first channel 625). The first end portion 611 may have a cross-section shaped substantially complimentary to a corresponding cross-section of a void 635 defined by the first channel 625 (see, e.g., the substantially square horizontal cross-section of first end portion 611 shown in Fig. 7 and the substantially complimentary horizontal cross-section of the void 635 shown in Fig. 8). The first end portion 611 may include a material sufficiently rigid to permit slidable positioning along a length of the first channel (for example, first end portion 611 may include a rubber material or the like). At least one of the panels may include a width 636 extending from the first end portion 611 toward the second end portion 653. The width may be formed substantially by a material that is resiliently deformable such that the panel can be penetrated by an object (e.g., support medium 697), and where the material may substantially conform to the shape of the object to hold the object in a relatively fixed position along the panel. In some cases, the first opening 624 is sized and shaped to accommodate growth of a plurality of plants across a width thereof. Similarly, the width of the panel may be sized to accommodate two or more plants inserted side by side in the panel, thus allowing for more plants, or more types of plants, to be cultivated in a single housing 612.

The material forming the substantial portion of the width 636 of the panel may include a plurality of bristles (e.g., the bristles may extend from the first end portion 611). The bristles, or other material forming the width 636 of the panel, may include a nylon material. Aspects of the material(s) forming the width 636 of the panel may be similar to those described with respect to either, or both, of the plurality of bristles 536 of Fig. 5 and the blocker 1034 of Fig. 10. At least one of the panels may include a width 636 formed substantially by a material structurally configured to wick water throughout a length (e.g., a vertical length) of the panel (for example, the bristles may be structurally configured to wick water). This feature may advantageously improve water flow to plants along the length of the panel and promote root development. In some cases, the second end portion 653 may include terminal ends of at least some of the plurality of bristles.

In some cases, an exterior surface (e.g., a surface oriented toward an opening such as the first opening 624, or disposed along the first opening 624) of at least one of the panels may include a color, and/or a material, that substantially reflects and/or absorbs a predetermined amount of light-e.g., at least 50% of extended photosynthetically active radiation (ePAR) light. In other words, the exterior surface may provide an optical return of at least 50% of incident radiation within a 400-750 nm spectrum. For example, the exterior surface may include a substantially white color that substantially reflects at least 50% of ePAR light. More specifically, by way of example, if the photosynthetic photon flux density (PPFD)-light arriving at the plant in the ePAR zone-is about 150, then about 75 or more PPFD will be rebounded. In some aspects, the bristles themselves, which may form the width 636 of one or more of the panels, may include a white color (or another color known to advantageously reflect light in a predetermined manner). In other aspects, an exterior of the first panel 617 (or another panel) may include a coating and/or other material thereon that is structurally configured to advantageously reflect light in a predetermined manner. It will be understood that such light rebounding may be advantageous because smaller lights (and/or lights requiring less power) or less lights may be required, resulting in power savings and/or mitigating heat concerns from lighting. One or more of these features, and/or other features of the system described herein-such as the shape, configuration, and materials of the plant support apparatus or the lighting apparatus, location of lighting relative to the plant canopy, and so on-may provide lower optical losses than typically experienced in conventional growing systems.

Any of the panels may include a second end portion 653 on an opposite end of the width 636 of the panel from the first end portion 611. When a panel is engaged with each of the first channel 625 and the second channel 637, the panel (e.g., the second end portion 653 of the panel) and the second channel are engaged such that removal of the panel from the second channel 637 may be provided by application of a predetermined force. For example, the second end portion 653 may be engaged with the second channel 637 in a loose-fitting or releasable manner; should a user desire to bypass the panel (e.g., to access a portion of the housing 612 blocked by the panel), they may be able to disengage the panel from the second channel 637 by application of a predetermined force, and they may subsequently be able to reengage the panel with the second channel 637. The preceding steps may be accomplished without removing the panel from the first channel 625. The predetermined force may be provided, e.g., by power washing the panel (or otherwise directing a fluid at the panel with a predetermined force) and/or manually engaging the panel to move an end thereof. The width of the second channel 637 may be determined based on a desired looseness or stability of the second end portion 653 of the panel (where a narrow width is more stable, and a wide width is more flexible).

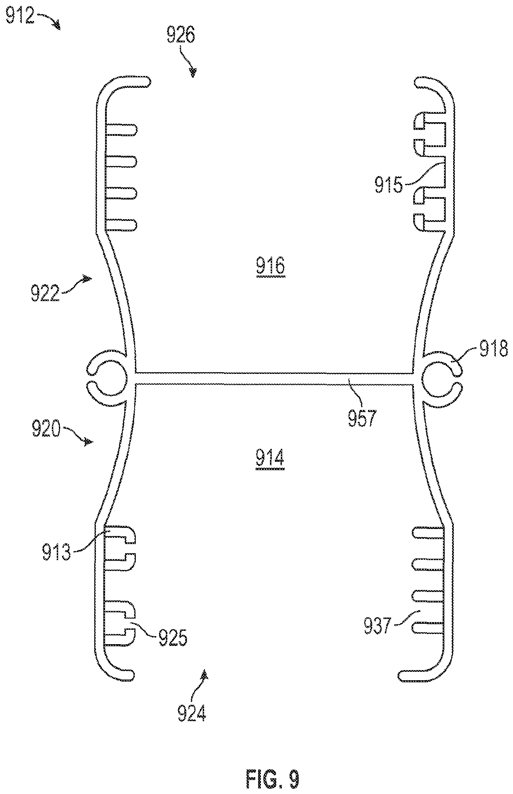

The housing 612 may be structurally configured for hanging to facilitate a vertical arrangement of one or more plants 692 along the housing 612 (e.g., housing 612 may be hung in a same or similar manner to that described for the housing 1012 of Fig. 10). The housing 612 may include an engagement element 618 for hanging the housing. The engagement element 618 may be couplable to a fixture for hanging the housing 612, and the fixture may be further couplable to an overhead support structure (e.g., an overhead support structure such as any described herein may include a fixture for hanging the housing 612). The engagement element 618 may be, for example, a threaded hole, a hook, and/or another fastening mechanism. Other aspects of the engagement element 618 and engagement therewith may be similar to those described in relation to any of the engagement elements 918 or 1018 (see Figs. 9-10) described herein.

The housing 612 may include an interior boundary 657, and the first chamber 614 and the second chamber 616 may be separated by the interior boundary 657. The engagement element 618 may be included on a top of the interior boundary 657 (e.g., the engagement element 618 may be attached to, or may be integrally formed with, the top of the interior boundary 657). The interior boundary may include a plurality of ridges 669, such as those shown projecting into the first chamber 614 and the second chamber 616 in Fig. 7. The plurality of ridges 669 may form fluid pathways along a length of the housing 612, so that, for example, water and/or air may traverse through the housing 612 along the fluid pathways formed by the plurality of ridges 669. In some cases, the plurality of ridges 669 are structurally configured to engage with roots of the plant (e.g., roots of the plant 692 may project through the second panel 619 and engage with the plurality of ridges 669). In some aspects, the number, size, and/or shape of the ridges and the spacing therebetween may be configured to balance requirements of (i) providing available surface area for contact with roots with (ii) the ability to readily disengage the plant from the ridges when removing the plant from the housing 612.

Fig. 9 is a cross-sectional overhead view of a housing 912 of the plant support apparatus, in accordance with a representative embodiment, where some features of the housing 912 may be the same or similar to features described elsewhere herein (e.g., with respect to the housing 612 of Figs. 6-8). It will be understood that the cross-section of the housing 912 may be formed (e.g., by an extrusion process) to any desired length of the plant support apparatus. The housing 912 may have a first opening 924 on a first side 920 and a second opening 926 on a second side 922. The housing 912 may define a first chamber 914 accessible through the first opening 924 and a second chamber 916 accessible through the second opening 926. The two chambers may be accessible from opposite sides of the housing 912 (e.g., the first side 920 may be located opposing the second side 922). In this manner, and as shown in Fig. 1, the first side 920 and the second side 922 of the housing 912 may be oriented to face different rows of lighting apparatus 150 and HVAC system 184, thereby enabling each side of the housing 912 to be exposed to different growing conditions (e.g., lighting and ventilation). As shown in Fig. 9, the first chamber 914 and the second chamber 916 may be disposed back-to-back; in other aspects, however, the first chamber 914 and the second chamber 916 may be disposed offset from one another, such as having a similar configuration to that shown in the housing 1012 of Fig. 10.

A plurality of engagement portions 913 may be disposed along sidewalls 915 of the housing 912. The sidewalls 915 may form side boundaries within each of the first chamber 914 and the second chamber 916. In some cases, engagement portions 913 may be unitarily formed with the housing 912. In other cases, engagement portions 913 may be connected to the housing 912, for example, with mounting hardware or the like. At least one of the engagement portions 913 may include a first channel 925. The first channel 925 may be structurally configured for slidable engagement with at least a portion of a panel (such as the first panel 617 of Fig. 7). At least one of the engagement portions 913 may include a second channel 937 disposed across from the first channel 925 (e.g., on disposed on opposing sides of the first chamber 914). The second channel 937 may be structurally configured for slidable engagement with another portion of one of the panels (e.g., with reference to the first panel 617 of Fig. 7, a first end portion 611 of a panel may be slidably engageable within the first channel 925 and a second end portion 653 of the same panel may be slidably engageable within the second channel 937). In one aspect, at least one of the engagement portions 913 may be resilient or hinged. This feature may allow the engagement portions 913 to be temporarily moved out of the way, improving ease of insertion of one or more panels, blockers, or similar into the housing 912.

The housing 912 may include an interior boundary 957, and the first chamber 914 and the second chamber 916 may be separated by the interior boundary 957. One or more engagement elements 918 may be included on the housing 912 (two engagement elements 918 are shown in the present embodiment). Engagement elements 918 may be similar to engagement elements described elsewhere herein, e.g., the engagement element 618 of Figs. 6-8.

Fig. 10 is perspective view of a plant support apparatus 1010 in accordance with a representative embodiment. The plant support apparatus 1010, and other embodiments of the plant support apparatus described herein, may be suitable for use with any of the vertical growing systems described herein (e.g., the vertical growing system 100 of Figs. 1 and 2), with other vertical growing systems, and/or as independent systems or devices. The plant support apparatus 1010 may be a component of and/or may cooperate with other elements of any of the systems described herein. In general, the plant support apparatus 1010 may be structurally configured to hold planting media (e.g., one or more of planting media 1090 and/or one or more plant plugs 1098) along a vertical length of a housing (e.g., housing 1012), so that plants may be grown along the vertical length of the housing. In certain aspects, the housing includes two chambers (e.g., a first chamber 1014 and a second chamber 1016) that are each structurally configured to hold planting media. The two chambers may be accessible from opposite sides of the housing. The plant support apparatus may also include a blocker (e.g., blocker 1034) disposed along an opening of each chamber. The blocker may be structurally configured to support plants as well as to block water from leaving the chamber and/or prevent light from entering the chamber. The design of the plant support apparatus may be suitable for cultivating many different types of plants. In particular, the shown embodiment of the plant support apparatus 1010 includes a housing 1012 having one or more chambers (e.g., first chamber 1014 and second chamber 1016), a blocker 1034, and planting media 1090, where any of these components may be the same or similar to corresponding components described elsewhere herein.

The housing 1012 as shown has a length oriented in a substantially vertical direction, e.g., along a vertical axis 1001 that extends through the length of the plant support apparatus 1010 such that it may be vertically oriented such as by being substantially perpendicular to the ground or floor of a growing space. In this manner, it will be understood that the vertical axis 1001 may be the z-axis. It will also be understood that a cross-section of the housing 1012 may be formed (e.g., by an extrusion process) to any desired length of the plant support apparatus 1010, as described with reference to the housing 612 of Fig. 7. The housing 1012 may define a first chamber 1014 and a second chamber 1016, each of which may be structurally configured to hold planting media 1090 along the length of the housing 1012 or a portion thereof. The housing 1012 may be further configured to hold a blocker 1034 for engagement with and/or support of one or more plants. The plants may be planted in the plant support apparatus 1010 by inserting the plants through the blocker 1034 and into the planting media 1090 (as shown, both the blocker 1034 and the planting media 1090 extend along a vertical length of the housing 1012, and both are illustrated as transparent to allow views of other components of the plant support apparatus 1010). In embodiments, the housing 1012 is structurally configured for hanging (or otherwise) to facilitate a vertical arrangement of one or more plants along the housing 1012 (see, e.g., Figs. 1-2). For example, the housing 1012 may include an engagement element 1018 disposed on a top end of the housing 1012. The engagement element 1018 may be, for example, a threaded hole, a hook, or another fastening mechanism. The engagement element 1018 may be couplable to a fixture for hanging the housing 1012, and the fixture may be further couplable to an overhead support structure (e.g., an overhead support structure such as any described herein may include a fixture for hanging the housing 1012). The engagement element 1018 may further be configured for coupling with a positioning system, such as the positioning system described with reference to Fig. 4, or another x-y or x-y-z positioning system. For example, the engagement element 1018 may be configured to couple to a rail system of a positioning system (such as described with reference to the positioning system 506 of Fig. 5).

The housing 1012 may include a first side 1020 and a second side 1022 opposing the first side 1020. The first chamber 1014 may be accessible through a first opening 1024 on the first side 1020, and the second chamber 1016 may be accessible through a second opening 1026 on the second side 1022. The first chamber 1014 and the second chamber 1016 may be accessed for a variety of reasons, such as for insertion and/or removal of planting media; planting or harvesting plants; cleaning the housing 1012; insertion and/or removal of sensors, food, water, plant treatments, or another substance/element; or similar.

The first chamber 1014 and the second chamber 1016 may be structurally configured to hold planting media 1090. For example, either of the first chamber 1014 or the second chamber 1016 may include one or more chamber edges 1028 designed to retain planting media and/or another element such as a blocker 1034 as described herein. For example, the first chamber 1014 and the second chamber 1016 may hold planting media 1090 along substantially an entire length of the housing 1012. Alternatively, the first chamber 1014 and the second chamber 1016 may hold planting media 1090 at discrete locations along the length of the housing 1012. The arrangement of the first chamber 1014 and the second chamber 1016 on opposing sides of the housing 1012 may allow plants to be grown on either one or both sides of the plant support apparatus 1010.

Each chamber of the housing 1012 may be structurally configured to hold one or more plants (see, e.g., plant 692 of Fig. 6) in engagement with planting media 1090. More specifically, a root system (e.g., root system 696 of the plant 692) may engage with the planting media 1090. At the time of planting, the plant may not fully engage directly with the planting media 1090, but may be inserted into the planting media 1090 as a plant plug 1098 (or may be coupled to a plant plug 1098), which may include a plug media with which the root system (e.g., root system 696 of the plant 692) is engaged. In other words, the plants need not be, but may be, planted bare-root into planting media 1090. A "plant plug" as used herein may refer to both the plug media and the entire plant, or to a portion thereof. In this manner, the plant plug 1098 may be thought of as a second planting media, where this second planting media may engage with the planting media 1090 (which can be considered a first planting media, e.g., where the second planting media is engageable to the first planting media) or otherwise with the housing 1012 or another portion of the plant support apparatus 1010. That is, a second planting media (e.g., the plant plug 1098) may be engageable to at least one of a first planting media, the blocker 1034, and the housing 1012. In an aspect, the second planting media includes a hydroponic media, e.g., including one or more of perlite, coconut coir, vermiculite, rockwool, pellets (e.g., clay pellets), oasis cubes, starter plugs, rice hulls, pumice, woodchips and/or sawdust, moss, sand, gravel, air, and so forth. Also or instead, the second planting media may include one or more of seeds and roots embedded therein.

In fact, an advantage of the present teachings may include flexibility of one or more of the planting media 1090 and the plant plug 1098. By way of example, a plurality of shapes of one or more of the planting media 1090 and the plant plug 1098 may be suitable for use in the present teachings, which may differ from existing systems and techniques that may require certain shapes for these components (e.g., where some existing systems require a plant plug to be circular, or to have a flat bottom). In general, the plant plug 1098 may merely be a means for cooperating with the planting media 1090 or another portion of the plant support apparatus 1010.

In some aspects, a plant plug 1098 may be omitted, e.g., where bare roots engage with the planting media 1090. And in some aspects, the planting media 1090 itself may be omitted, e.g., where plant plugs 1098 or the like serve as the only media, or where bare roots themselves engage with the housing 1012, or where other portions of the plant itself are supported by the plant support apparatus 1010 (e.g., the shoot system 694 of Fig. 6 shown engaged with at least one of the first panel 617 and the third panel 623). For example, a frictional engagement may secure a plant to the housing 1012, which may or may not include any planting media 1090 therein or thereon. In an aspect without any media, the chambers described herein may be considered "root chambers" or the like.

Each of the first chamber 1014 and the second chamber 1016 may be structurally configured to allow water to traverse through the respective chambers from a top housing end 1027 to a bottom housing end 1029. For this purpose, the top housing end 1027 and the bottom housing end 1029 may be at least partially open. In certain cases, the top housing end 1027 and/or the bottom housing end 1029 may be sufficiently open to allow insertion and/or removal of the planting media 1090, and/or the blocker 1034, therethrough.

The blocker 1034 may be disposed along one or both of the first opening 1024 and the second opening 1026. The blocker 1034 may, as shown, extend substantially the entire length of the housing 1012. Alternatively, multiple blockers may be disposed in discrete locations along the length of the housing 1012. The blocker 1034 may be held in engagement with the housing 1012, for example by one or more chamber edges 1028 or other fixtures of the housing 1012. The blocker 1034 may be removable from the housing 1012; for example, the blocker 1034 may be removed, cleaned, and reinserted into the housing between harvesting and planting cycles. In other aspects, the blocker 1034 may be removed for replacement, or, in yet some other aspects, the blocker 1034 may be integral with the housing 1012. In certain embodiments, the blocker 1034 includes a plurality of bristles projecting from opposing sides of one or more of the first opening 1024 and the second opening 1026 (e.g., the bristles may project from the area of the chamber edges 1028 toward the general center of the first opening 1024 or second opening 1026), or may extend from one chamber edge 1028 across an entirety of the opening. The blocker 1034 may be structurally configured to engage with, and support, a shoot system of a plant (e.g., a stem thereof), and/or another portion of the plant. The plant support apparatus 1010 may thereby hold one or more plants in engagement with the planting media 1090 in a substantially fixed position relative to the housing 1012 (e.g., see plant plugs 1098 schematically shown at different positions along the length of housing 1012). In some embodiments, the blocker 1034 is configured to support the plant at an angle; for example, the plant may be angled upwardly by up to about 45 degrees (e.g., when planting leafy green vegetables), or may be angled downwardly (e.g., when planting tomatoes).

The bristles, or another configuration or component of the blocker 1034, may be formed of nylon, another hydroponic-safe plastic, foam, and/or another resilient material. In general, it is desirable that the material of the blocker 1034 be deformable to allow passage of a plant therethrough and permit growth of the plant without restriction, while also being capable of returning to its original shape for repeated use after the removal of plants. It may also be desirable for the blocker 1034 to be structurally configured to block light from reaching the root system of a plant (e.g., to discourage mold or algal growth), and/or to reflect light toward the shoot system of the plant. To this end, the blocker 1034 may have a relatively high reflectivity surface or be a reflective color, such as white.

The blocker 1034 may be structurally configured to mitigate water from passing from the chamber of the housing 1012 to an external environment 1082 (e.g., by drainage and/or by evaporation), and vice-versa. This configuration of the blocker 1034 can both improve water control within the chamber and ambient control (e.g., humidity control) outside of the chamber. The blocker 1034 may also or instead be structurally configured to mitigate infiltration of one or more contaminants from an environment external to a chamber to an environment within the chamber, and/or vice-versa. Such contaminants may include water (or other moisture), light, pests, chemicals, nutrients, air, and so on.

The planting media 1090 may be included in a kit with any of the plant support apparatus described herein, or may cooperate with a plant support apparatus or vertical growing system provided separately. The planting media 1090 may be any media that is structurally configured for engagement with a root system of plants; for example, the planting media 1090 may include a natural fiber, wool, nylon, and/or foam. The planting media 1090 may be a media suitable for hydroponic growing. In addition, it may be desirable that the planting media 1090 allow for efficient and effective root development in a relatively small space. The planting media 1090 may be disposed through a length, or vertical dimension, of the housing 1012. The planting media 1090 may be a single strip of material disposed through the length, or it may be multiple strips of material disposed throughout the length (e.g., stacked end to end along the length, or positioned at discrete locations along the length). By disposing the planting media 1090 through the length, the plant support apparatus 1010 may be used to cultivate a variety of plants with different spacing requirements. Multiple types of plants may be cultivated in a single plant support apparatus (e.g., a different type of plant in each of the first chamber 1014 and the second chamber 1016 or different types of plant within a single chamber, possibly having different spacing along the length of the chamber). Also or instead, the same types of plants may be included, but at different growth stages.

In embodiments, the planting media 1090 may be structurally configured to allow water to traverse, e.g., in a controlled manner, through the planting media 1090 from a top housing end 1027 to a bottom housing end 1029 of the plant support apparatus 1010. This feature may promote water absorption by the root system of the plants without saturating the plants. For example, the planting media 1090 may be configured to maintain a predetermined saturation level for a predetermined period of time. These requirements may vary depending upon the variety of plant, desired growth rate, and other conditions. Maintaining a predetermined saturation level may involve delivering a predetermined amount of water to the planting media 1090. Maintaining a predetermined saturation level may also or instead involve environmental controls (e.g., through control of an HVAC system), selection of certain media (e.g., through a density of selected planting media 1090), and the like. In an aspect, one or more sensors monitor such conditions (e.g., a saturation level), enabling control / manipulation thereof, e g., where the sensors directly or indirectly communicate with an irrigation system and/or HVAC system.

The planting media 1090 may be removable from the housing 1012, for example by removing the blocker 1034 and removing the planting media 1090 from the opening in the housing (e.g., the first opening 1024 or the second opening 1026), and/or by removing the planting media 1090 from the top or bottom of the chamber (which in some instances may be done while the blocker 1034 is being held substantially stationary by the housing 1012). In some cases, the planting media 1090 may be replaced within the housing 1012 after being removed. For example, the planting media may be removed, cleaned or sterilized, and replaced in the housing 1012 allowing recycling of a large portion of the media used by the system.

Fig. 11 and Fig. 12 show a partial perspective view and a cross-sectional overhead view, respectively, of a lighting apparatus 1150 for a vertical growing system, in accordance with a representative embodiment. The lighting apparatus 1150, and other embodiments of the lighting apparatus described herein, may be suitable for use with vertical growing systems and techniques described herein (e.g., a vertical growing system 100 according to Figs. 1 and 2), with other vertical growing systems, and/or as independent systems or devices. The lighting apparatus 1150 may thus be a component of and/or may cooperate with other elements of any of the systems described herein. In general, the lighting apparatus 1150 may be structurally configured for mounting one or more light sources (e.g., LEDs or the like) in a substantially vertical orientation. The lighting apparatus 1150 may include one or more substantially angled sides (e.g., V-shaped sides) structurally configured to create a wide and uniform canopy for illumination of plants located in one or more adjacent plant support apparatus such as any as described herein. In particular, the shown embodiment of the lighting apparatus 1150 includes a lighting support structure 1152, one or more light sources (e.g., a first set of light sources 1167 and/or a second set of light sources 1168), control circuitry 1159, and a cover 1175, where any of these components may be the same or similar to corresponding components described elsewhere herein.

Fig. 13 is a cross-sectional overhead view of a lighting support structure 1352, in accordance with a representative embodiment. The lighting support structure 1352 may be a component of and/or may cooperate with other elements of any of the devices or systems described herein, e.g., the lighting apparatus 1150 of Figs. 11-12. In particular, the lighting support structure 1352 may include a first side 1354, a second side 1360 opposing the first side 1354, a plurality of mounting surfaces (e.g., a first mounting surface 1358, a second mounting surface 1364, a third mounting surface 1365, and a fourth mounting surface 1366), and a core 1370.

The first side 1354 and the second side 1360 may each include an engagement region having at least two mounting surfaces. For example, the first mounting surface 1358 and the second mounting surface 1364 may both be disposed along the first side 1354 and may collectively form a first engagement region. Similarly, the third mounting surface 1365 and the fourth mounting surface 1366 may be disposed along the second side 1360, and may collectively form a second engagement region on the second side 1360.

In certain implementations, the plurality of mounting surfaces may include at least two mounting surfaces of each engagement region that form an angle, e.g., where they collectively form a substantially V-shaped surface. Advantageously, such a configuration including two opposing substantially V-shaped sides (e.g., the first side 1354 and the second side 1360) may allow for the illumination of plants on either of the two opposing sides of the lighting apparatus, thus allowing cultivation of a relatively large number of plants in a growing space and providing the ability to customize lighting conditions (e.g., daylength, intensity, color temperature, frequency or wavelength, spectra, and the like) on both sides of the lighting apparatus. To form the substantially V-shaped surface, each mounting surface of the lighting support structure 1352 may be substantially aligned along a corresponding axis (for example, the first mounting surface 1358 may be substantially aligned along a first axis A1, the second mounting surface 1364 may be substantially aligned along a second axis A2, the third mounting surface 1365 may be substantially aligned along a third axis A3, and the fourth mounting surface 1366 may be substantially aligned along a fourth axis A4). The axes aligned with mounting surfaces of a side may intersect one another, such that the mounting surfaces of a side form a substantially V-shaped structure. In some cases, the mounting surfaces of one side may contact one another to form a substantially V-shaped structure (e.g., the first mounting surface 1358 and the second mounting surface 1364 may contact one another). In other cases, the mounting surfaces of one side may be spaced apart from one another, while still forming a substantially V-shaped structure. More specifically, in the Fig. 13 embodiment, the first axis A1 intersects the second axis A2 such that the first mounting surface 1358 and the second mounting surface 1364 form a first substantially V-shaped structure on the first side 1354 with the first mounting surface 1358 oriented away from the second mounting surface 1364. With the mounting surfaces of a given side oriented away from one another, the canopy spread of the light sources mounted to the given side may be relatively wide (e.g., wider than if the mounting surfaces were substantially coplanar, substantially parallel, or angled toward one another). Similarly, the third axis A3 is shown as intersecting the fourth axis A4 such that the third mounting surface 1365 and the fourth mounting surface 1366 form a second substantially V-shaped structure on the second side 1360 with the third mounting surface 1365 oriented away from the fourth mounting surface 1366.

In embodiments, the substantially V-shaped structure(s) of the lighting support structure 1352 may include an angle of about 15 degrees between the mounting surfaces that form the substantially V-shaped structure (e.g., the first mounting surface 1358 and the second mounting surface 1364 may have an angle, α, of about 15 degrees therebetween, in other words, axes A1 and A2 may intersect to form an angle of about 15 degrees). In other exemplary embodiments, the substantially V-shaped structures of the lighting support structure 1352 may include an angle, α, of about 30 degrees, about 45 degrees, about 60 degrees, about 90 degrees, between 15 degrees and 90 degrees, or another angle desired to produce a predetermined canopy spread.

One or more of the mounting surfaces (e.g., the first, second, third, or fourth mounting surfaces) may define a void 1372 structurally configured to receive a fastener, or may otherwise be structurally configured to promote engagement between light sources and the lighting support structure 1352. The void 1372 may be similar to the void 1172 described with reference to Fig. 12.

The core 1370 may be a substantially hollow central region of the lighting support structure 1352. The first side 1354 and the second side 1360 may be coupled forming the core 1370, and may be disposed on opposite sides of the core 1370. Said another way, the core 1370 may be defined by the first side 1354 and the second side 1360, which may be coupled to completely define a perimeter of the core 1370 or may be spaced apart to partially define the perimeter of the core 1370. Certain embodiments of the lighting support structure 1352 may also or instead include one or more interstitial spaces 1371 formed between mounting surfaces. In cases where the core 1370 is hollow, the hollow region of the core may be considered an interstitial space 1371. One or more of the interstitial spaces 1371 (and/or the core 1370) may be structurally configured to allow warm air to traverse therethrough (or otherwise to disperse heat from a heat source), at least in part to mitigate heat transfer to one or more plants disposed adjacent to the lighting apparatus. In an example configuration, one or more of the interstitial spaces 1371 may be structurally configured to permit airflow through the lighting support structure 1352, e.g., for cooling and/or ventilation. For instance, one or more of the interstitial spaces 1371 may provide a pathway along a length of the lighting support structure 1352 (e.g., where the pathway has an opening on a top end and a bottom end of the lighting support structure 1352, and where the pathway may connect the top end to the bottom end). This and other features of the lighting apparatus may allow lights to be located in relatively close proximity to the plants without concerns of overheating and the like.

With reference to Figs. 12 and 13, it will be understood that the cross-section of the lighting support structures 1152 and 1352 shown in these figures may be formed (e.g., by an extrusion process) to any desired length.

Turning back to Figs. 11 and 12, one or more of the light sources (e.g., a first set of light sources 1167 and/or a second set of light sources 1168) may be structurally configured to emit light directed toward one or more plants disposed (e.g., in a plant support apparatus such as any described herein) adjacent to the lighting apparatus 1150. The first set of light sources 1167 (e.g., a plurality of LEDs) are shown coupled to the first mounting surface 1158, and the second set of light sources 1168 (e.g., a plurality of LEDs) are shown coupled to the second mounting surface 1164. One or more of the mounting surfaces (e.g., the first, second, third, or fourth mounting surfaces) may include a void 1172 structurally configured to receive a fastener 1199, or may otherwise be structurally configured to promote engagement between light sources and the lighting support structure 1152. For example, the void 1172 may include a threading that is structurally configured for engagement with a threaded fastener 1199 (e.g., an M4 sized screw). The fastener 1199 may be used to mount one or more of a light source (e.g., light sources 1167 or 1168) and a printed circuit board (PCB) 1161. In embodiments, a void (e.g., with threading) may extend along substantially the entire length of the lighting support structure 1152 (e.g., where the cross-section of either of the lighting support structures 1152 or 1352, shown in Fig. 12 and Fig. 13, are extruded to a desired length). This feature can advantageously allow lighting sources and/or control circuitry to be mounted in many desired locations along the length of the lighting support structure 1152.

The control circuitry 1159 for the light sources may be included on the PCB 1161, and may be coupled to the lighting support structure 1152, for example, with one or more fasteners 1199. The control circuitry 1159 may be coupled to any, or all, the first, second, third, and fourth mounting surfaces. In some cases, the first set of light sources 1167 and the second set of light sources 1168 may each be coupled to a corresponding PCB 1161 that is coupled to a corresponding mounting surface. As shown in the figures, a third and a fourth set of light sources may be included, and may be coupled to the corresponding third and fourth mounting surfaces.

The cover 1175 may be structurally configured to protect the lighting apparatus 1150. For example, the cover 1175 may be structurally configured to prevent water from contacting the lighting support structure 1152 and/or light sources coupled thereto (e.g., first set of light sources 1167 or second set of light sources 1168), and may further be structurally configured to permit light emitted from the light sources to pass through the cover 1175, in a filtered or unfiltered manner. For example, the cover 1175 may allow a high percentage of visible wavelengths of light-between about 350 nm and 650 nm-to be transmitted therethrough. The cover 1175 may be transparent, may be colored, and/or may be structurally configured to filter certain wavelengths of light or similar (e.g., the cover 1175 may be colored or otherwise configured to alter a spectra of light passing therethrough). Embodiments of the cover 1175 may at least partially surround the lighting support structure 1152 and light sources coupled thereto. For example, in the shown embodiment, the cover 1175 completely surrounds the lighting support structure 1152. The cover 1175 may have a substantially cylindrical shape. Certain embodiments of the cover 1175 may be structurally configured for sliding engagement with the lighting support structure 1152. For example, the cover 1175 may include one or more projections 1176 structurally configured for sliding engagement (or other engagement) with the lighting support structure 1152 (e.g., the one or more projections 1176 may be slidingly engageable with an interstitial space 1171, allowing the cover 1175 to slide over the top or bottom end of the lighting support structure 1152 and along the length thereof). This feature may allow for easy removal, or partial removal, of the cover 1175 for replacing light sources, servicing control circuitry, cleaning the cover, or similar. In some cases, the cover 1175 may include a substantially open top surface 1177 and a substantially open bottom surface 1178, which can be helpful for ventilation, heat dispersion, air flow, or otherwise.

The lighting apparatus 1150 may include an engagement element 1118 (e.g., similar to that described with reference to any of the engagement elements 918 or 1018 of Figs. 9-10) disposed on a top end of the lighting support structure 1152. The engagement element 1118 may be couplable to a fixture for hanging the lighting apparatus 1150, e.g., from an overhead support structure.

Fig. 14 is a partial perspective view of an irrigation system 1438 for the vertical growing system (e.g., the vertical growing system 100 of Fig. 1, or any of the vertical growing systems described herein), in accordance with a representative embodiment. The vertical growing system may generally include one or more plant support apparatus 1410 and/or one or more overhead support structures (e.g., a first overhead support structure 1430), where it will be understood that one or more of these components may be the same or similar to any corresponding components described herein. Furthermore, the irrigation system 1438 may also or instead include additional components described in the system 100 of Fig. 1, or other systems described herein, where these components may be omitted from Fig. 14 for clarity. Furthermore, the irrigation system 1438 may be, or may not be, a reclaim irrigation system (e.g., a system structurally configured for collecting water that drains from the plant support apparatus 1410 and recycling some or all of the collected water back into the irrigation supply). In particular, the shown embodiment of the irrigation system 1438 includes one or more water supply lines 1440, and one or more outlets (e.g., a first outlet 1442 and a second outlet, where a second outlet 143 is shown, for example, in Fig. 2), where any of these components may be the same or similar to corresponding components described elsewhere herein.

The first outlet 1442 is shown internal to an outlet coupler 1439 (shown in partial cutaway). The outlets may be in fluid communication with one or more water supply lines (e.g., the water supply line 1440) for supplying water to the planting media disposed in the plant support apparatus 1410. The irrigation system 1438 may also or instead include additional components described elsewhere herein, for example in the irrigation system 145 of Fig. 1, where these components may be omitted from Fig. 14 for clarity. In the shown embodiment, one or more outlets may be positioned above each chamber of the plant support apparatus 1410, which can allow for independent control of the irrigation of each chamber. The one or more outlets (e.g., via the water supply line 1440) may each be connected to an outlet coupler 1439. For example, the one or more outlets may be connected to the water supply line 1440 via an insert, such as a hose insert, and the insert may be retained within the outlet coupler 1439. The outlet coupler 1439 may have one or more holes to allow the passage of water therethrough; i.e., one hole or multiple holes may be provided depending on the desired degree of water dispersion to the plants. In some embodiments, one or more outlets may be positioned above each chamber of the plant support apparatus 1410, which can advantageously allow for independent control of the irrigation of each chamber. For example, the first outlet 1442 may be positioned above a first chamber 1414 for supplying water to the planting media disposed in the first chamber 1414. Similarly, a second outlet may be positioned above the second chamber 1416. Any of the outlets may include a drip line which may allow for substantially even distribution (or other desired distribution) of water throughout the planting media disposed within each of the first chamber 1414 and the second chamber 1416. For example, one or more of the first outlet 1442 and a second outlet (e.g., above the second chamber 1416) may include an independent drip line, or the first outlet 1442 and the second outlet may be outlets of a single drip line or of connected drip lines.

The outlet coupler 1439 may be configured for releasably engaging with components of a vertical growing system, such as the first overhead support structure 1430. In some cases, the outlet coupler 1439 may include one or more magnets 1431 located on or near an engagement surface 1433 (e.g., a surface configured to engage another component of the vertical growing system) of the outlet coupler 1439. To this end, the first overhead support structure 1430 may be at least partially formed of a ferromagnetic material, and the one or more magnets 1431 of the outlet coupler 1439 may be magnetically engageable with the first overhead support structure 1430. The one or more magnets 1431 may be enclosed within the outlet coupler 1439 to provide protection from the environment. In an aspect, the outlet coupler 1439 itself is formed of a ferromagnetic material.

Such a configuration of the water supply line 1440, the outlet coupler 1439, and the first overhead support structure 1430 can allow for the outlets of the irrigation system to be reconfigured (e.g., moved along a support structure or the like) with relative ease, as changes can be made at the point of outlet without changing other aspects of the irrigation system 1438. For example, in a first configuration of the vertical growing system, the plant support apparatus 1410 may have a first spacing therebetween of, for example, 6 inches (15.24 cm). The outlet couplers 1439 may be placed about 6 inches apart from one another by magnetically coupling (or otherwise coupling) each outlet coupler 1439 along the length of the first overhead support structure 1430. If it is subsequently desired to change the positioning of the plant support apparatus 1410 to a second spacing of about 8 inches (20.32 cm) apart, the outlet couplers 1439 can be moved with relative ease due to the releasable magnetic coupling of the outlets to the first overhead support structure 1430 or other structure.

The outlet coupler 1439 may also, or instead, have an engagement surface 1433 that is shaped substantially complementary to a portion of the first overhead support structure 1430 or other component/structure (e.g., support structure) of the vertical growing system. This feature may help guide or retain the desired position of outlet coupler 1439. As shown in Fig. 14, the engagement surface 1433 may be contoured to engage a lower edge of the first overhead support structure 1430. In other embodiments, the first overhead support structure 1430 or other engageable support structure may have structural features that further guide or retain the position of the outlet couplers 1439. For example, the first overhead support structure 1430 may have a series of holes, channels, notches, or similar that are spaced along its length and are configured to engage with the outlet couplers 1439. The outlet coupler 1439 may have a corresponding structural feature to facilitate such engagement. Stated otherwise, one or more of the outlet coupler 1439 and a component of the vertical growing system to which it is engageable may include one or more projections, voids, or other similar features, where collectively these components include cooperating features for engagement to facilitate a coupling of the outlet coupler 1439 to a component of the vertical growing system, e.g., in a reconfigurable manner. In some embodiments, such guiding structural features may have a predetermined spacing along the length of the first overhead support structure 1430 (e.g., one inch). The outlet coupler 1439 and/or a component configured for engaging therewith may also or instead include other engagement features such as one or more of a clamp, a clip, a dock, a dowel, a friction fit component or feature, a hook, hook and loop fasteners, a pin, a screw, a snap fit feature, a slider, and the like.

Fig. 15 is a partial perspective view of a water supply system 1538 and a ventilation system 1584 for a vertical growing system 1500, in accordance with a representative embodiment. The water supply system 1538 may be part of a vertical growing system that may generally include one or more plant support apparatus (e.g., plant support apparatus 110 of Fig. 1) and/or one or more lighting apparatus 1550 (and vice-versa), for example in the system 100 of Figs. 1 and 2, where these components may be omitted from Fig. 15 for clarity. Similarly, the water supply system 1538 may be the same or similar to any corresponding components described herein, e.g., with reference to the irrigation system 145 of Figs. 1 and 2. For example, the water supply system 1538 may include a trough 1546 that may be in fluid communication with one or more reservoirs, water supply lines, water sources, pumps, or the like as described herein.

The water supply system 1538 may include one or more misters 1572 that are structurally configured to discharge mist to provide additional moisture to the vertical growing system 1500. For example, misters 1572 may be used to provide ambient control such as by increasing humidity in a predetermined section of the vertical growing system 1500, e.g., at a particular elevation level (height) of the plant support apparatus-such as at a relatively low elevation height. Thus, in certain aspects, the one or more misters 1572 may not provide conventional irrigation functions (such as providing water, such as nutrient-rich water, for uptake by the plants), but may instead provide water (e.g., without any added nutrients or the like) for ambient control, particularly in certain regions of the vertical growing system 1500 (e.g., adjacent to or otherwise near a lower elevation).

In other aspects, the one or more misters 1572 may share at least some attributes with an irrigation system. For example, and with reference to Fig. 1, a mister may be connected to a water source 141 (which may supply treated or untreated water, as discussed herein); may share one or more water supply lines 140, one or more pumps 148, etc.; and/or may be a component of a reclaim irrigation system. By way of further example, in certain situations, it may be desirable to use a single water source to supply water both for irrigation (uptake by the plants) and for the misters 1572 (ambient control). In other situations, it may be desirable to keep irrigation and ambient control as separate, independent systems. For example, an irrigation system and a water supply system 1538 for ambient control may be supplied by separate water sources-e.g., a first water source which may be treated with nutrients or the like for irrigation and a second water source which may be untreated, filtered, or the like for ambient control. In yet other situations, a single water source may be provided with a split downstream of the source where nutrients may be added, filtration methods applied, or similar. Thus, it will be generally understood that, in some aspects, the irrigation system provides water to a root system of plants and not to the foliage, whereas the water supply system 1538 provides water to foliage of plants (directly and/or indirectly) for ambient control (e.g., humidity control).

Thus, in some aspects, the overall vertical growing system 1500 may lack any foliage applications for irrigation-e.g., where the water supply system 1538 may be more of an ambient controller in a vertical growing system 1500 and not traditional irrigation as known in the art. Thus it will be understood that irrigation systems described herein may include one or more water delivery systems, may include multiple water delivery systems with different functions, and may include multiple water delivery systems that may or may not be in fluid communication with one another.

As shown in Fig. 15, the misters 1572 may be plumbed in a vertical series and may be located adjacent a lighting apparatus 1550. In certain aspects, the misters 1572 are structurally configured to be deployed at lower elevations of the vertical growing system 1500-e.g., due to heat and humidity rising, the lower elevations may have a lower temperature and/or humidity, which can be subsidized by the misters 1572. Water may be supplied to the misters 1572 by a secondary water supply line 1574, which may be located near a lower end of the vertical growing system 1500, or elsewhere. As explained above, the water supplied to the misters 1572 may be different from water supplied to the irrigation systems described herein, as it may be desirable that the water supplied to the misters be substantially pure and free of any fertilizers, chemicals, or the like. In other aspects, the water supplied to the misters 1572 is the same as the water supplied to the irrigation system, such as coming from the same source, and/or utilizing some or all of the same supply lines. In some cases, the water supplied to the misters 1572 may be filtered or treated, such by treatment with a reverse osmosis (RO) purification process.

In some aspects, the misters 1572 may be located along the entire height of the vertical growing system 1500, and they may be controlled to discharge different amounts and/or at different times for the different elevations. For example, discharging mist near the top of a column may be useful to help control the temperature at these higher elevations (e.g., by misting colder water). However, this can impact humidity and cause mold. Thus, in some aspects, UV irradiation (e.g., illumination with light in the 100nm-280nm spectrum) or other mold mitigation techniques may be deployed in these areas. The misters 1572 may be oriented to face in the same or different directions as desired for the particular application. For example, in Fig. 15 the three misters 1572 shown are oriented in alternating directions.

The ventilation system 1584 may, in some aspects, be similar to the HVAC system described herein (e.g., the HVAC system 184 of Figs. 1 and 2). The ventilation system 1584 may also, or instead, include one or more fans 1585 mounted on one or more fan mounts 1587. The one or more fans 1585 and one or more fan mounts 1587 may be located between one or more rows of the plant support apparatus (e.g., plant support apparatus 110 of Fig. 1), to promote airflow between the plants and/or portions of the plant support apparatus. In general, the ventilation system 1584 may provide and/or control airflow (e.g., speed and/or direction of airflow) and/or air circulation within the vertical growing system 1500, such as between rows of plant support apparatus. The ventilation system 1584 may also or instead provide a cooling effect (e.g., by moving warmer air around the lighting apparatus 1550 away from the plant support apparatus), may be used to affect humidity (e.g., decrease humidity), and/or may generally simulate airflow conditions of an outdoor environment.

The ventilation system 1584, in accordance with a representative embodiment, may include a fan mount structure 1588 shown in a partially exploded view. Thus, the ventilation system 1584 may include combinations of one or more fans 1585, one or more fan mounts 1587, an engagement coupler 1589, a ventilation system controller 1581, one or more ventilation system sensors 1583, and/or a ventilation system motor 1591 (which is shown as a separate component, but will be understood as possibly being integral with a fan).

The fans 1585 may be any fan suitable for mounting within the vertical growing system 1500 and its related environment. In one example, a fan 1585 may have a size of about 120mm, and may be similar to cooling fans commonly used with computing hardware. The example ventilation system 1584 includes multiple vertical arrangements of fans 1585, where each vertical arrangement includes multiple fans 1585. In one aspect, all of the fans 1585 of such a system may be the same type of fan. In other aspects, the fans 1585 of such a system may have different sizes, provide different air flow rates, and/or have other different specifications, according to the desired growing conditions in the vicinity of the fans 1585. In some cases, the fans 1585 may be arranged to allow air to be moved vertically (e.g., above the canopy), allowing for better ambient control (e.g., of temperature, humidity, and the like) and enabling efficient growth of plants in the vertical growing system 1500 (e.g., faster growth than might otherwise be achieved without the fans 1585). The fans 1585 may be modular, and may optionally include an integral motor. In this manner, the fans 1585 may be removable, movable, and/or replaceable within a fan mount 1587. The fans 1585 may be wired independently and/or in series with other fans for power and/or controls.

The fan mounts 1587 may be structurally configured for mounting one or more fans 1585 thereto. For example, and as shown in the partially exploded view, multiple fans 1585 (seven are shown) may be mounted to a single fan mount structure 1588 in a vertical arrangement (in other words, with one fan mounted directly above another). In some embodiments, each fan mount 1587 may be structurally configured for coupling to another fan mount 1587, e.g., to form the fan mount structure 1588 or a portion thereof. For example, each fan mount 1587 may have an upper edge structurally configured for coupling to a lower edge of another fan mount 1587 (for example, two fan mounts 1587 may be connected in a vertical arrangement using hardware such as a bolt and a nut). In this way, the fan mounts 1587 may be modular and may be arranged to provide various heights of the ventilation system 1584. In one example, a fan mount 1587 and/or another modular portion of a fan mount structure 1588 may have a height of 3 feet (91.44 cm); multiple fan mounts of this type may be coupled to one another to provide a ventilation system height of 6ft, 9ft, 12ft, etc.; where other sizes are also or instead possible. In another aspect, the fan mount 1587 may not be modular, but may instead extend to a height sufficient to provide ventilation along the entire height of the plant support apparatus, or along the height desired for ventilation (if different). For example, a single fan mount 1587 may provide a ventilation system height of 5ft, 6ft, 8ft, 10ft, 12ft, etc. In some cases, one or more fan mounts 1587 of the ventilation system 1584 may all have the same size and/or may be sized to hold the same size of fans 1585. In other cases, the fan mounts 1587 of the ventilation system 1584 may have different sizes, and/or may be configured to hold different sizes of fans 1585. The fan mounts 1587 and/or the fan mount structure 1588 may be configured for hanging, such as from a second overhead support structure (e.g., the second overhead support structure 132 of Fig. 1) or another component of a vertical growing system as described herein.

Engagement coupler 1589 may be coupled to, or be formed with, any of the fan mounts 1587 and may be configured for hanging the fan mounts 1587 within a vertical growing system (e.g., hanging from the second overhead support structure 132 of a vertical growing system 100, where such a structure may include a rail or the like upon which the fan mount structure 1588 is movable). Engagement coupler 1589 may include or may be connectable to, for example, a hook, an eyebolt, a chain, a rope, a bungee, or another mechanism suitable for hanging the fan mount 1587 or fan mount structure 1588. In some aspects, engagement coupler 1589 may be located at an upper end of the fan mount structure 1588. In another aspect, engagement coupler 1589 may be located at both an upper and a lower end of the fan mount structure 1588. In an aspect, the fan mount structure 1588 itself may include a motor, or may otherwise be engageable with another component for moving the fan mount structure 1588 (e.g., such as for rotating the fan mount structure 1588).

The ventilation system controller 1581 may be configured to control aspects of the one or more fans 1585, such as power (or otherwise on/off capability), fan speed, and/or fan direction (e.g., direction of rotation of the fan blades). The ventilation system controller 1581 may control one or more fans 1585 independently and/or in one or more groups. The ventilation system controller 1581 may be in communication with, and/or may control, other elements of the ventilation system 1584 such as the one or more ventilation system sensors 1583, the ventilation system motor 1591, and/or the fan mount structure 1588 (e.g., for rotation thereof). In some aspects, the ventilation system controller 1581 is included as part of another controller, such as any as described herein.

The ventilation system sensors 1583 may include one or more sensors for temperature, air flow, humidity, and/or other environmental conditions. The ventilation system sensors 1583 may be in communication with the ventilation system controller 1581, and/or may provide other functionality as described with reference to the HVAC system 184 of Fig. 1. Feedback provided by a ventilation system sensor 1583 may be used by the ventilation system controller 1581 to control one or more fans 1585.

The ventilation system motor 1591 may be coupled to one or more fan mounts 1587 and may be used to adjust the position of the fan mounts 1587. The ventilation system motor 1591 may be controlled by the ventilation system controller 1581, which may control power, speed, duration of motion, or the like for the ventilation system motor 1591. For example, the ventilation system controller 1581 may determine (e.g., based on feedback from one or more ventilation system sensors 1583) that a specific region of the vertical growing system 1500 has a higher than desirable temperature. In response, the ventilation system controller 1581 may control the ventilation system motor 1591 connected to a specific group of one or more fan mounts 1587 to direct airflow toward the region of higher temperature. This can be done through controlling power and/or operation of one or more fans 1585, and/or through moving (e.g., rotating) a fan mount 1587, a fan 1585, and/or a fan mount structure 1588 (or portion thereof).

In one example configuration of a ventilation system 1584, a plurality of fan mounts 1587 may be connecting to form a module having a 3ft height that may be vertically coupled to other modules for a desired total height (e.g., two such modular fan mounts may be coupled to a total height of 6ft), and oriented toward a direction where airflow is needed. A plurality of fans 1585 coupled to the fan mounts 1587 may all be oriented to direct air flow in the same direction, or may be individually oriented for a plurality of directions. In one example configuration, the fans may face the same direction, to provide a constant airflow in this direction. This arrangement may facilitate installation of HVAC components, as the origin and direction of the air flow is known.

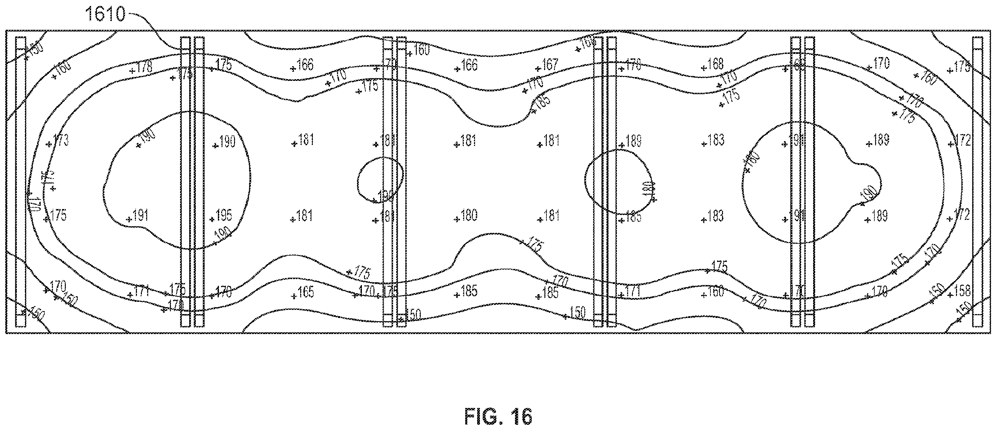

Fig. 16 is a plot of photosynthetic photon flux density (PPFD) provided by a vertical growing system, in accordance with a representative embodiment. The PPFD plot illustrates the amount of photosynthetically available radiation illuminating an exemplary group of plant support apparatus 1610 as provided by a plurality of lighting support apparatus at a 12 inch (30.48 cm) distance from the plant support apparatus 1610.

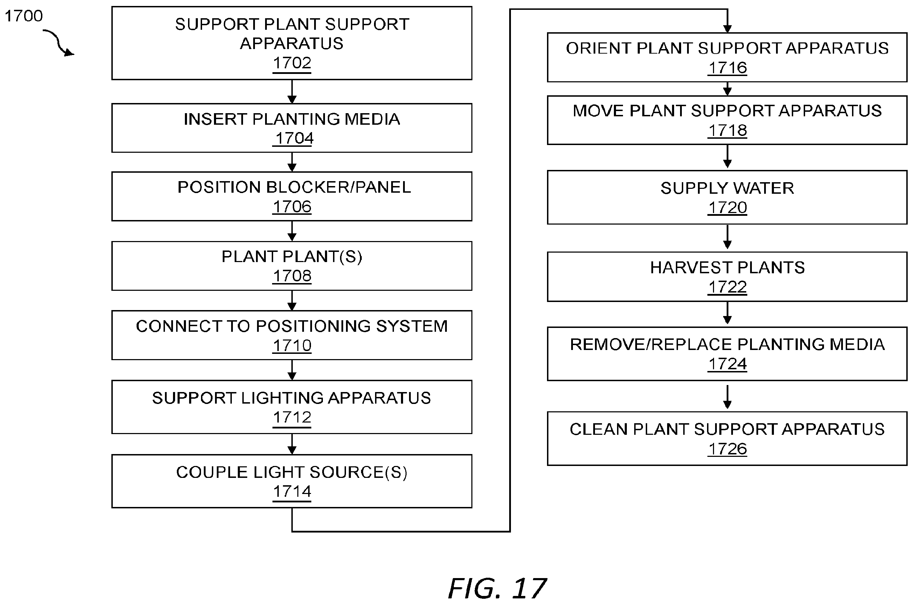

Fig. 17 is a flow chart of a method for growing plants in a vertical growing system, in accordance with a representative embodiment. The method 1700 may utilize any of the systems or system components described herein, e.g., the system 100 described with reference to Figs. 1-2. In general, the method 1700 represents a method for growing plants in a vertical arrangement structurally configured to increase production in a growing space.

As shown in step 1702, the method 1700 may include supporting a plant support apparatus, such as supporting plant support apparatus 110 on a first overhead support structure 130 as discussed with reference to Fig. 1. For example, a housing (e.g., housing 612 of Figs. 6-7 or the housing 1012 of Fig. 10) of a plant support apparatus may be hung by an engagement element (e.g., engagement element 618) or may be otherwise couplable to a fixture for hanging the housing (e.g., the engagement coupler 1589 shown in Fig. 15) The engagement element and/or the fixture may be directly or indirectly (e.g., in connection with additional coupling or fastening elements) couplable to an overhead support structure of the system.

The plant support apparatus may include a housing (e.g., housing 612) with a first opening on a first side thereof and a second opening on a second side thereof (e.g., first opening 624 and the second opening 626). The second side of the housing may be oriented opposing the first side of the housing. The housing may further define a first chamber (e.g., the first chamber 614) accessible through the first opening and a second chamber (e.g., the second chamber 616) accessible through the second opening. In some aspects, supporting the plant support apparatus may include connecting the plant support apparatus to one or more components of an irrigation system (e.g., the reclaim irrigation system 145 of Fig. 1 or the water supply system 1538 of Fig. 15).

As shown in step 1704, the method 1700 may include inserting planting media into at least one of the first chamber and the second chamber. For example, and with reference to Fig. 10, planting media 1090 may be inserted into at least one of the first chamber 1014 and the second chamber 1016, such as by accessing either of the two chambers from the first opening 1024 and/or the second opening 1026. The planting media may be inserted along a length of the housing, and, once inserted, may extend along a majority of the length of the housing. The planting media may be the same or similar to planting media described elsewhere herein (e.g., the planting media 1090 of Fig. 10).

As shown in step 1706, the method 1700 may include positioning a blocker and/or one or more panels within the plant support apparatus. For example, a blocker (e.g., blocker 1034 of Fig. 10) may be disposed along one or more of the first opening (e.g., the first opening 1024) and the second opening (e.g., the second opening 1026). The blocker may be the same or similar to the blocker described elsewhere herein (e.g., the blocker 534 of Fig. 5 or the blocker 1034 of Fig. 10). The blocker may be disposed along an opening of the housing. In some aspects, the blocker may be structurally configured to mitigate water from passing from one or more of the first chamber and the second chamber to an external environment, and may also, or instead, be structurally configured to engage with and support at least a portion of one or more plants. In addition, or instead, step 1706 may include disposing one or more panels within the plant support apparatus. For example, and with reference to Figs. 6-8, a first panel 617 may be disposed along or adjacent to the first opening 624 of the first chamber 614. A second panel 619 may be disposed a predetermined distance (e.g., D2) from the first panel 617 within an interior of the first chamber 614. Either, or both, of the first panel and the second panel may be configured to engage with and support at least a portion of one or more plants (e.g., the roots of one or more plants). While in this example two panels are discussed, it is to be understood that one or more (e.g., three) panels may be disposed within the plant support apparatus.

As shown in step 1708, the method 1700 may include planting plants. For example, one or more plants may be planted in engagement with the planting media The plants may also, or instead, be planted in engagement with one or more blockers or one or more panels as discussed in step 1706. With reference to Fig. 5, one or more plants 592 may be planted in the plant support apparatus 510 by inserting the plant 592 through the blocker 534 and into planting media generally located behind the blocker 534. In this manner the one or more plants may be held in a substantially fixed position relative to the housing. In certain aspects, the step 1708 may include engaging a shoot system of the one or more plants (e.g., the shoot system 694 of Fig. 6) with either the blocker or the one or more panels. In this manner, the one or more plants may thereby be supported with either the blocker or the one or more panels.

As shown in step 1710, the method 1700 may include connecting the plant support apparatus to a positioning system, such as the positioning system discussed with reference to the vertical growing system 400 of Fig. 4, the positioning system 506 of Fig. 5, or other systems described herein. With reference to Fig. 5, the positioning system may include a rail 509 and a fixture 504 for connecting the plant support apparatus to the rail. As described with reference to Fig. 4, the positioning system may be used to move the plant support apparatus 410 along the rail of the first overhead support structure 43 0 onto a header 402, or other structure, where the plant support apparatus 410 may be further moved to a remote location 480. The step 1710 may, in some aspects, include moving the plant support apparatus 410 from the remote location 480 and into the vertical growing system 400, such as for initial installation of the plant support apparatus or replacement of the plant support apparatus after removal from the vertical growing system

As shown in step 1712, the method 1700 may include supporting a lighting apparatus, such as supporting the lighting apparatus 150 on a second overhead support structure 132 as discussed with reference to Fig. 1. For example, the lighting apparatus may be hung by an engagement element, which may be similar to engagement element 618 of housing 612 of Figs. 6-8. In another aspect, the lighting apparatus may be couplable to a fixture for hanging from a support structure (e.g., the engagement coupler 1589 shown in Fig. 15). The engagement element and/or the fixture of the lighting apparatus may be directly or indirectly (e.g., in connection with additional coupling or fastening elements) couplable to an overhead support structure of the system. When supported, the lighting apparatus may be disposed adjacent to the plant support apparatus (see, e.g., the lighting apparatus 150 disposed adjacent the plant support apparatus 110 of system 100 of Fig. 1).

The lighting apparatus may include, with reference to Fig. 13, one or more lighting support structures 1352. Each lighting support structure 1352 may include a first side 1354 including a first engagement region having at least two mounting surfaces collectively forming a substantially V-shape (e.g., the first mounting surface 1358 and the second mounting surface 1364 collectively form a substantially V-shape). The lighting support structure 1352 may also include a second side 1360 including a second engagement region having at least two mounting surfaces collectively forming a substantially V-shape (e.g., the third mounting surface 1365 and the fourth mounting surface 1366).

As shown in step 1714, the method 1700 may include coupling one or more light sources to the lighting apparatus. The one or more light sources may be the same as, or similar to, light sources described elsewhere herein (e.g., a first set of light sources 1167 and/or a second set of light sources 1168 of Figs. 11-12). This step may include, coupling at least one light source to each of the at least two mounting surfaces on at least one of the first engagement region and the second engagement region of the one or more lighting support structures. For example, referring to Fig. 11, the first set of light sources 1167 (e.g., a plurality of LEDs) may be coupled to the first mounting surface 1158, and the second set of light sources 1168 (e.g., a plurality of LEDs) may be coupled to the second mounting surface 1164.

As shown in step 1716, the method 1700 may include orienting a plant support apparatus. This step may include aspects of step 1718, such as moving the plant support apparatus using a positioning system. This step may also, or instead, include aspects of step 1702, such as coupling an engagement element of a plant support apparatus and/or a fixture connected thereto at a desired location or angular orientation with respect to an overhead support structure of the system. In general orienting a plant support apparatus may include orienting one of the first opening and the second opening of the plant support apparatus (e.g., the first opening 624 and the second opening 626 of the plant support apparatus 610 of Fig. 6) to face one of the first side and the second side of the lighting apparatus (e.g., the first side 1354 and the second side 1360 of the lighting apparatus of Fig. 13). This arrangement will position the plant support apparatus so that the one or more plants are facing at least one light source of the lighting apparatus. Orienting the plant support apparatus may also, or instead, including arranging the plant support apparatus relative to one or more HVAC systems, ventilation systems, irrigation systems, misting systems, or the like.

As shown in step 1718, the method 1700 may include moving a plant support apparatus (e.g., moving the plant support apparatus to a different location). This step may include aspects of step 1710, such as the positioning system discussed with reference to the vertical growing system 400 of Fig. 4. In some cases, the plant support apparatus may be moved via the positioning system (e.g., along a rail such as the rail 509 of Fig. 5) into a remote location, or to another location within the system. Moving the plant support apparatus to a remote location may be desirable to improve the ease of planting, harvesting plants, cleaning or maintaining the plant support apparatus and/or plants, combinations thereof, or similar. In other cases, the plant support apparatus 110 may be moved to only a slightly different location, such as to optimize lighting conditions, increase or decrease spacing along the support structure, or to otherwise adjust growing conditions (such as temperature, humidity, and so on). Thus, in some aspects, step 1718 may include or be similar to certain aspects of orienting the plant support apparatus described in step 1716.

As shown in step 1720, the method 1700 may include supplying water to the plant support apparatus 110. This step may utilize any of the system components elsewhere described herein, e.g., components of the water supply system 1538 of vertical growing system 1500 described with reference to Figs. 15. Referring to Figs. 1-2, supplying water may include connecting a first outlet 142 and a second outlet 143 in fluid communication with a water source 141 via a water supply line 140. Referring to Fig. 14, the first outlet 1442 may be positioned above the first chamber 1414 and the second outlet may be positioned above the second chamber 1416. Water may be supplied to planting media disposed in the first chamber via the first outlet and to planting media disposed in the second chamber via the second outlet.

As shown in step 1722, the method 1700 may include harvesting plants. In some aspects, plants may be harvested after moving the plant support apparatus to a remote location, as described in step 1718. Harvesting plants may include removing the plants from a blocker or panel (see step 1706).

As shown in step 1724, the method 1700 may include removing, and in some instances, subsequently replacing, planting media. In some aspects, the planting media may be removed non-destructively; said another way, some planting media may be removed and replaced in the housing for re-use while substantially maintaining its shape and integrity. In other aspects, planting media may be removed and replaced a limited number of times before degrading to a point where it may no longer be reused. Examples of such planting media are discussed elsewhere herein, e.g., the planting media 1090 of Fig. 10.

As shown in step 1726, the method 1700 may include cleaning a plant support apparatus. In some aspects, the plant support apparatus may be cleaned after being moved to a remote location, as described in step 1718. Moving the plant support apparatus away from the system for cleaning may improve ease of cleaning the plant support apparatus. In some cases, after cleaning, the plant support apparatus may again be oriented within the system as described in step 1716. The step 1726 may also include removal and/or cleaning of any blockers or panels disposed in the plant support apparatus, e.g. in step 1706. Such blockers or panels may be removed by providing a predetermined force, such as by power washing, or as otherwise described with reference to Figs. 6-8.

The above systems, devices, methods, processes, and the like may be realized in hardware, software, or any combination of these suitable for a particular application. The hardware may include a general-purpose computer and/or dedicated computing device. This includes realization in one or more microprocessors, microcontrollers, embedded microcontrollers, programmable digital signal processors or other programmable devices or processing circuitry, along with internal and/or external memory. This may also, or instead, include one or more application specific integrated circuits, programmable gate arrays, programmable array logic components, or any other device or devices that may be configured to process electronic signals. It will further be appreciated that a realization of the processes or devices described above may include computer-executable code created using a structured programming language such as C, an object oriented programming language such as C++, or any other high-level or low-level programming language (including assembly languages, hardware description languages, and database programming languages and technologies) that may be stored, compiled or interpreted to run on one of the above devices, as well as heterogeneous combinations of processors, processor architectures, or combinations of different hardware and software. In another aspect, the methods may be embodied in systems that perform the steps thereof, and may be distributed across devices in a number of ways. At the same time, processing may be distributed across devices such as the various systems described above, or all of the functionalities may be integrated into a dedicated, standalone device or other hardware. In another aspect, means for performing the steps associated with the processes described above may include any of the hardware and/or software described above. All such permutations and combinations are intended to fall within the scope of the present disclosure.

Embodiments disclosed herein may include computer program products comprising computer-executable code or computer-usable code that, when executing on one or more computing devices, performs any and/or all of the steps thereof. The code may be stored in a non-transitory fashion in a computer memory, which may be a memory from which the program executes (such as random-access memory associated with a processor), or a storage device such as a disk drive, flash memory or any other optical, electromagnetic, magnetic, infrared, or other device or combination of devices. In another aspect, any of the systems and methods described above may be embodied in any suitable transmission or propagation medium carrying computer-executable code and/or any inputs or outputs from same.

The foregoing description, for purpose of explanation, has been described with reference to specific embodiments. However, the illustrative discussions above are not intended to be exhaustive or to limit the disclosure to the precise forms disclosed. Many modifications and variations are possible in view of the above teachings.

Unless the context clearly requires otherwise, throughout the description, the words "comprise," "comprising," "include," "including," and the like are to be construed in an inclusive sense as opposed to an exclusive or exhaustive sense; that is to say, in a sense of "including, but not limited to." Additionally, the words "herein," "hereunder," "above," "below," and words of similar import refer to this application as a whole and not to any particular portions of this application.

It will be appreciated that the devices, systems, and methods described above are set forth by way of example and not of limitation. For example, regarding the methods provided above, absent an explicit indication to the contrary, the disclosed steps may be modified, supplemented, omitted, and/or re-ordered without departing from the scope of this disclosure. Numerous variations, additions, omissions, and other modifications will be apparent to one of ordinary skill in the art. In addition, the order or presentation of method steps in the description and drawings above is not intended to require this order of performing the recited steps unless a particular order is expressly required or otherwise clear from the context.

The method steps of the implementations described herein are intended to include any suitable method of causing such method steps to be performed, consistent with the patentability of the following claims, unless a different meaning is expressly provided or otherwise clear from the context. So, for example performing the step of X includes any suitable method for causing another party such as a remote user, a remote processing resource (e.g., a server or cloud computer) or a machine to perform the step of X. Similarly, performing steps X, Y, and Z may include any method of directing or controlling any combination of such other individuals or resources to perform steps X, Y, and Z to obtain the benefit of such steps. Thus, method steps of the implementations described herein are intended to include any suitable method of causing one or more other parties or entities to perform the steps, consistent with the patentability of the following claims, unless a different meaning is expressly provided or otherwise clear from the context. Such parties or entities need not be under the direction or control of any other party or entity, and need not be located within a particular jurisdiction.

While particular embodiments have been shown and described, it will be apparent to those skilled in the art that various changes and modifications in form and details may be made therein without departing from the spirit and scope of this disclosure and are intended to form a part of the invention as defined by the following claims, which are to be interpreted in the broadest sense allowable by law.
Examples are set out in the following list of numbered clauses:
1. A vertical growing system for plants in cooperation with planting media, the vertical growing system comprising:
   a plant support apparatus supported by a first overhead support structure, the plant support apparatus comprising:
      a housing having a first opening on a first side thereof and a second opening on a second side thereof, the second side opposing the first side, and the housing defining a first chamber accessible through the first opening and a second chamber accessible through the second opening, the first chamber and the second chamber structurally configured to hold planting media along a length of the housing and to hold one or more plants in engagement with the planting media in a substantially fixed position relative to the housing; and
   a lighting apparatus supported from a second overhead support structure and disposed adjacent to the plant support apparatus, the lighting apparatus comprising:
      one or more lighting support structures, each lighting support structure comprising a first side including a first engagement region having at least two mounting surfaces collectively forming a substantially V-shape, and a second side including a second engagement region having at least two mounting surfaces collectively forming a substantially V-shape; and
      at least one light source coupled to each of the at least two mounting surfaces on at least one of the first engagement region and the second engagement region of the one or more lighting support structures,
   wherein one of the first opening and the second opening of the plant support apparatus is oriented to face one of the first side and the second side of the lighting apparatus, so that the one or more plants supported in the plant support apparatus are facing the at least one light source of the lighting apparatus.
2. The vertical growing system of clause 1, wherein the lighting apparatus further comprises one or more drivers electrically coupled to the at least one light source to control power supplied thereto, the one or more drivers located remotely from the one or more lighting support structures to mitigate heat transfer to the first side and the second side of the one or more lighting support structures.
3. The vertical growing system of any of the preceding clauses, wherein the plant support apparatus further comprises a blocker disposed along one or more of the first opening and the second opening, the blocker structurally configured to mitigate water from passing from one or more of the first chamber and the second chamber to an external environment, and the blocker structurally configured to engage with, and support, a shoot system of the one or more plants.
4. The vertical growing system of any of the preceding clauses, wherein the first overhead support structure and the second overhead support structure are the same structure.
5. The vertical growing system of any of the preceding clauses, wherein at least one of the first overhead support structure and the second overhead support structure include a rail, wherein at least one of the plant support apparatus and the lighting apparatus are movable along the rail.
6. The vertical growing system of any of the preceding clauses, further comprising one or more of a cooling system and a ventilation system at least partially located above the lighting apparatus.
7. The vertical growing system of clause 6, wherein one or more of the cooling system and the ventilation system is located above one or more of the first overhead support structure and the second overhead support structure.
8. The vertical growing system of any of clauses 6 to 7, wherein one or more of the cooling system and the ventilation system includes substantially flexible ducts.
9. The vertical growing system of any of the preceding clauses, further comprising a cooling system structurally configured to create a flow of air through the one or more lighting support structures.
10. The vertical growing system of any of the preceding clauses, further comprising:
   a water supply line in fluid communication with a water source; and
   a first outlet and a second outlet in fluid communication with the water supply line, the first outlet positioned above the first chamber for supplying water to planting media disposed in the first chamber, and the second outlet positioned above the second chamber for supplying water to planting media disposed in the second chamber.
11. The vertical growing system of clause 10, wherein at least one of the first outlet and the second outlet includes a drip line.
12. The vertical growing system of any of clauses 10 to 11, further comprising a reclaim irrigation system, the reclaim irrigation system comprising a trough disposed beneath the plant support apparatus, the trough structurally configured to collect water that passes through one or more of the first chamber and the second chamber.
13. The vertical growing system of clause 12, further comprising a reservoir in fluid communication with the trough, and a pump in fluid communication with the reservoir.
14. The vertical growing system of clause 13, wherein the pump is structurally configured to move water from the reservoir to one or more of the water supply line and the water source.
15. The vertical growing system of any of clauses 13 to 14, wherein the trough is pitched toward the reservoir.
16. The vertical growing system of any of clauses 10 to 15, wherein the water supply line is positioned above the plant support apparatus.
17. The vertical growing system of clause 16, wherein a rail of a positioning system is disposed between the water supply line and the plant support apparatus, the plant support apparatus movable along the rail via the positioning system.
18. The vertical growing system of any of clauses 10 to 17, further comprising one or more regulators along one or more of the water supply line, the first outlet, and the second outlet, the one or more regulators structurally configured to control a flow of the water.
19. The vertical growing system of any of clauses 10 to 18, wherein at least one of the first outlet and the second outlet is connected to an outlet coupler structurally configured for releasably engaging with the first overhead support structure.
20. The vertical growing system of clause 19, wherein the outlet coupler is magnetically engageable with the first overhead support structure.
21. The vertical growing system of any of clauses 19 to 20, wherein the outlet coupler has an engagement surface shaped substantially complementary to a portion of the first overhead support structure.
22. The vertical growing system of any of the preceding clauses, further comprising a plurality of misters plumbed in a vertical series and located adjacent to the lighting apparatus.
23. The vertical growing system of clause 22, wherein at least a portion of the plurality of misters are structurally configured to be deployed along a lower elevation of the vertical growing system.
24. The vertical growing system of any of the preceding clauses, further comprising a ventilation system at least partially located adjacent to the plant support apparatus.
25. The vertical growing system of clause 24, wherein the ventilation system includes one or more fan mounts structurally configured for mounting one or more fans thereto in a substantially vertical configuration.
26. The vertical growing system of clause 25, wherein each of the one or more fan mounts is structurally configured for coupling to another of the one or more fan mounts.
27. The vertical growing system of any of clauses 25 to 26, wherein a plurality of the one or more fan mounts is structurally configured for hanging from at least one of the first overhead support structure and the second overhead support structure.
28. The vertical growing system of clause 27, wherein at least one of the one or more fan mounts includes an engagement coupler located at an upper end of the at least one of the one or more fan mounts.
29. The vertical growing system of any of clauses 25 to 28, further including a ventilation system motor coupled to at least one of the one or more fan mounts and configured to adjust a position of the at least one of the one or more fan mounts.
30. The vertical growing system of any of clauses claim 25 to 29, further including a ventilation system controller in communication with the one or more fans for control thereof.
31. A lighting apparatus for a vertical growing system for plants, the lighting apparatus comprising:
   one or more lighting support structures, each lighting support structure comprising:
      a first side including a first engagement region having at least two mounting surfaces collectively forming a substantially V-shape; and
      a second side including a second engagement region having at least two mounting surfaces collectively forming a substantially V-shape;
   at least one light source coupled to each of the at least two mounting surfaces on at least one of the first engagement region and the second engagement region of the one or more lighting support structures; and
   one or more drivers electrically coupled to the at least one light source to control power supplied thereto, the one or more drivers located remotely from the one or more lighting support structures to mitigate heat transfer to the first side and the second side of the one or more lighting support structures.
32. The lighting apparatus of clause 31, wherein the at least one light source includes one or more light-emitting diodes (LEDs).
33. A lighting apparatus for a vertical growing system for plants, the lighting apparatus comprising:
   one or more lighting support structures, each lighting support structure comprising:
      a first side and a second side opposing the first side;
      a first mounting surface and a second mounting surface disposed along the first side, the first mounting surface substantially aligned along a first axis, the second mounting surface substantially aligned along a second axis, wherein the first axis intersects the second axis such that the first mounting surface and the second mounting surface form a first substantially V-shaped structure on the first side with the first mounting surface oriented away from the second mounting surface; and
      a third mounting surface and a fourth mounting surface disposed along the second side, the third mounting surface substantially aligned along a third axis, the fourth mounting surface substantially aligned along a fourth axis, wherein the third axis intersects the fourth axis such that the third mounting surface and the fourth mounting surface form a second substantially V-shaped structure on the second side with the third mounting surface oriented away from the fourth mounting surface;
   a first set of light-emitting diodes (LEDs) coupled to the first mounting surface, and a second set of LEDs coupled to the second mounting surface, the first set of LEDs and the second set of LEDs structurally configured to emit light directed toward one or more plants disposed adjacent to the first side of the one or more lighting support structures; and
   one or more drivers electrically coupled to at least one of the first set of LEDs and the second set of LEDs, the one or more drivers configured to control power supplied thereto, and the one or more drivers located remotely from the one or more lighting support structures to mitigate heat transfer to at least one of the first side and the second side of the one or more lighting support structures.
34. The lighting apparatus of clause 33, further comprising a third set of LEDs coupled to the third mounting surface, and a fourth set of LEDs coupled to the fourth mounting surface, the third set of LEDs and the fourth set of LEDs structurally configured to emit light directed toward one or more plants disposed adjacent to the second side of the one or more lighting support structures.
35. The lighting apparatus of any of clauses 33 to 34, wherein the first side and the second side are coupled via a core and disposed on opposite sides of the core.
36. The lighting apparatus of clause 35, wherein the core is substantially hollow.
37. The lighting apparatus of any of clauses 33 to 36, wherein each lighting support structure further comprises one or more interstitial spaces formed between one or more of the first mounting surface and the second mounting surface.
38. The lighting apparatus of clause 37, wherein at least one of the one or more interstitial spaces is structurally configured to allow heat to pass therethrough at least in part to mitigate heat transfer to one or more plants disposed adjacent to the lighting apparatus.
39. The lighting apparatus of any of clauses 37 to 38, wherein at least one of the one or more interstitial spaces is structurally configured to permit airflow through the one or more lighting support structures.
40. The lighting apparatus of any of clauses 37 to 39, wherein at least one of the one or more interstitial spaces is structurally configured to provide a pathway along a length of the one or more lighting support structures.
41. The lighting apparatus of any of clauses 33 to 40, wherein one or more of the first mounting surface, the second mounting surface, the third mounting surface, and the fourth mounting surface includes a void structurally configured to receive a fastener.
42. The lighting apparatus of clause 41, wherein the void includes threading structurally configured for engagement with a threaded fastener for mounting one or more of an LED and a printed circuit board.
43. The lighting apparatus of any of clauses 33 to 42, further comprising an engagement element disposed on a top end of the one or more lighting support structures, the engagement element couplable to a fixture for hanging the lighting apparatus adjacent to one or more plants.
44. The lighting apparatus of any of clauses 33 to 43, wherein the first substantially V-shaped structure includes an angle of about 30 degrees between the first mounting surface and the second mounting surface.
45. The lighting apparatus of any of clauses 33 to 44, further comprising a cover at least partially surrounding the one or more lighting support structures and LEDs coupled thereto.
46. The lighting apparatus of clause 45, wherein the cover is structurally configured to prevent water from contacting the one or more lighting support structures and LEDs coupled thereto, and wherein the cover is structurally configured to permit light emitted from LEDs to pass through the cover.
47. The lighting apparatus of any of clauses 45 to 46, wherein the cover is structurally configured for sliding engagement with the lighting support structure.
48. The lighting apparatus of clause 47, wherein the cover includes one or more projections structurally configured for sliding engagement with the lighting support structure.
49. The lighting apparatus of any of clauses 45 to 48, wherein the cover includes a substantially open top surface and a substantially open bottom surface.
50. The lighting apparatus of any of clauses 45 to 49, wherein the cover has a substantially cylindrical shape.
51. The lighting apparatus of any of clauses 33 to 50, further comprising control circuitry for LEDs, the control circuitry coupled to the one or more lighting support structures.
52. The lighting apparatus of clause 51, wherein control circuitry is coupled to each of the first mounting surface and the second mounting surface.
53. The lighting apparatus of clause 52, wherein control circuitry is coupled to each of a third mounting surface and a fourth mounting surface.
54. The lighting apparatus of any of clauses 52 to 53, wherein the control circuitry includes a printed circuit board (PCB).
55. The lighting apparatus of clause 54, wherein the first set of LEDs and the second set of LEDs are each coupled to a corresponding PCB that is coupled to a corresponding mounting surface of the one or more lighting support structures.
56. The lighting apparatus of clause 55, wherein a third set of LEDs and a fourth set of LEDs are each coupled to a corresponding PCB that is coupled to a corresponding mounting surface of the one or more lighting support structures.
57. A method of growing plants in a vertical growing system, the method comprising:
   supporting a plant support apparatus on a first overhead support structure, the plant support apparatus comprising:
      a housing having a first opening on a first side thereof and a second opening on a second side thereof, the second side opposing the first side, and the housing defining a first chamber accessible through the first opening and a second chamber accessible through the second opening;
   inserting planting media into at least one of the first chamber and the second chamber along a length of the housing;
   planting one or more plants in engagement with the planting media in a substantially fixed position relative to the housing;
   supporting a lighting apparatus on a second overhead support structure, the lighting apparatus disposed adjacent to the plant support apparatus, the lighting apparatus comprising:
      one or more lighting support structures, each lighting support structure comprising a first side including a first engagement region having at least two mounting surfaces collectively forming a substantially V-shape, and a second side including a second engagement region having at least two mounting surfaces collectively forming a substantially V-shape;
   coupling at least one light source to each of the at least two mounting surfaces on at least one of the first engagement region and the second engagement region of the one or more lighting support structures; and
   orienting one of the first opening and the second opening of the plant support apparatus to face one of the first side and the second side of the lighting apparatus, so that the one or more plants in the plant support apparatus are facing the at least one light source of the lighting apparatus.
58. The method of clause 57, further comprising:
   connecting the plant support apparatus to a positioning system including a rail;
   moving the plant support apparatus along the rail into a remote location via the positioning system; and
   harvesting plants from the plant support apparatus in the remote location.
59. The method of any of clauses 57 to 58, further comprising:
   connecting the plant support apparatus to a positioning system including a rail;
   moving the plant support apparatus along the rail into a remote location via the positioning system; and
   cleaning the plant support apparatus in the remote location.
60. The method of any of clauses 57 to 59, further comprising:
   positioning a blocker along one or more of the first opening and the second opening; and
   engaging a shoot system of the one or more plants with the blocker, thereby supporting the one or more plants with the blocker.
61. The method of any of clauses 57 to 60, further comprising:
   connecting a first outlet and a second outlet in fluid communication with a water source via a water supply line;
   positioning the first outlet above the first chamber and the second outlet above the second chamber;
   supplying water to planting media disposed in the first chamber via the first outlet; and
   supplying water to planting media disposed in the second chamber via the second outlet.
62. The method of any of clauses 57 to 61, further comprising:
   after inserting planting media, removing the planting media from the housing.
63. The method of clause 62, further comprising:
   after removing the planting media, replacing the planting media within the housing.
64. The method of any of clauses 57 to 63, further comprising:
   positioning a first panel along or adjacent to the first opening of the first chamber; and
   positioning a second panel a predetermined distance from the first panel within an interior of the first chamber,
   wherein the first panel and the second panel are structurally configured to engage with and support roots of the one or more plants.
65. A plant support apparatus for a vertical growing system, the plant support apparatus comprising:
   a housing having a first opening on a first side thereof and a second opening on a second side thereof, the second side opposing the first side, wherein the housing defines a first chamber accessible through the first opening and a second chamber accessible through the second opening;
   a plurality of engagement portions within each of the first chamber and the second chamber, the plurality of engagement portions disposed along sidewalls that form side boundaries within each of the first chamber and the second chamber; and
   one or more panels structurally configured for placement within each of the first chamber and the second chamber, the one or more panels engageable with at least one of the plurality of engagement portions to position and stabilize a panel within its respective chamber, the one or more panels structurally configured to engage with, and support in a substantially fixed position relative to the housing, at least one of (i) a shoot system of a plant and (ii) a support medium containing at least a portion of the plant.
66. The plant support apparatus of clause 65, wherein the housing is structurally configured for hanging to facilitate a vertical arrangement of one or more plants along the housing.
67. The plant support apparatus of any of clauses 65 to 66, wherein at least one of the one or more panels is removable and replaceable within a chamber of the housing.
68. The plant support apparatus of clause 67, wherein each of the one or more panels is removable and replaceable.
69. The plant support apparatus of any of clauses 67 to 68, wherein the at least one of the one or more panels is slidably engageable with at least one of the plurality of engagement portions.
70. The plant support apparatus of any of clauses 65 to 69, wherein the first chamber includes at least two panels, wherein a first panel of the at least two panels is disposed along or adjacent to the first opening, and wherein a second panel of the at least two panels is disposed a predetermined distance from the first panel within an interior of the first chamber.
71. The plant support apparatus of clause 70, wherein the first panel acts as a blocker along the first opening structurally configured to mitigate water from passing from the first chamber to an external environment, and structurally configured to engage with, and support, the shoot system of the plant.
72. The plant support apparatus of any of clauses 70 to 71, wherein the second panel is configured to hold the support medium containing at least a portion of the plant.
73. The plant support apparatus of clause 72, wherein the support medium includes a plant plug.
74. The plant support apparatus of any of clauses 70 to 73, wherein the first panel and the second panel have the same shape and are formed of the same materials.
75. The plant support apparatus of any of clauses 70 to 74, further comprising a third panel disposed a predetermined distance from the second panel within the interior of the first chamber.
76. The plant support apparatus of clause75, wherein the third panel is structurally configured to wick water therethrough for supplying to plants disposed along a length of the housing.
77. The plant support apparatus of any of clauses 65 to 77, wherein at least one of the one or more panels includes a width formed substantially by a material that is resiliently deformable such that the panel can be penetrated by an object, where the material substantially conforms to a shape of the object to hold the object in a fixed position along the panel.
78. The plant support apparatus of clause 77, wherein the material includes nylon.
79. The plant support apparatus of any of clauses 65 to 78, wherein the one or more panels are structurally configured to engage with and support roots of the plant.
80. The plant support apparatus of any of clauses 65 to 79, wherein at least two panels are disposed within a chamber, and wherein the at least two panels form a vertical pathway therebetween throughout the housing for a fluid to traverse through the housing.
81. The plant support apparatus of clause 80, wherein the fluid includes at least one of air and water.
82. The plant support apparatus of any of clauses 65 to 81, wherein at least one of the one or more panels includes a width formed substantially by a material structurally configured to wick water throughout a length of the panel.
83. The plant support apparatus of clause 82, wherein the material includes nylon.
84. The plant support apparatus of any of clauses 65 to 83, wherein an exterior surface of at least one of the one or more panels is a color that substantially reflects at least 50% of extended photosynthetically active radiation (ePAR) light.
85. The plant support apparatus of clause 84, wherein the color is substantially white.
86. The plant support apparatus of any of clauses 65 to 85, wherein at least one of the plurality of engagement portions includes a first channel.
87. The plant support apparatus of clause 86, wherein at least one of the one or more panels includes a first end portion slidably engageable within the first channel.
88. The plant support apparatus of clause 87, wherein the first end portion includes a shape having a cross-section shaped substantially complimentary to a corresponding cross-section of a void defined by the first channel.
89. The plant support apparatus of any of clauses 87 to 88, wherein the first end portion includes a rubber material.
90. The plant support apparatus of any of clauses 87 to 89, wherein bristles extend from the first end portion.
91. The plant support apparatus of clause 90, wherein the bristles include a nylon material.
92. The plant support apparatus of any of clauses 86 to 91, wherein at least one of the plurality of engagement portions includes a second channel disposed across from the first channel, and wherein a first end portion of a panel is slidably engageable within the first channel and a second end portion of the panel is slidably engageable within the second channel.
93. The plant support apparatus of clause 92, wherein the first end portion includes a material sufficiently rigid to permit slidable positioning along a length of the first channel.
94. The plant support apparatus of clause 93, wherein the material forming a substantial portion of a width of the panel includes a plurality of bristles, and wherein the second end portion includes terminal ends of at least some of the plurality of bristles.
95. The plant support apparatus of any of clauses 92 to 94, wherein, when a panel is engaged with each of the first channel and the second channel, the panel and the second channel are engaged such that removal of the panel from the second channel is provided by application of a predetermined force.
96. The plant support apparatus of clause 95, wherein the predetermined force can be provided by power washing the panel.
97. The plant support apparatus of any of clauses 65 to 96, wherein the first chamber and the second chamber are separated by an interior boundary.
98. The plant support apparatus of clause 97, wherein the interior boundary comprises a plurality of ridges.
99. The plant support apparatus of clause 98, wherein the plurality of ridges form fluid pathways along a length of the housing.
100. The plant support apparatus of any of clauses 98 to 99, wherein the plurality of ridges are structurally configured to engage with roots of the plant.
101. The plant support apparatus of any of clauses 97 to 100, wherein a top of the interior boundary includes an engagement element couplable to a fixture for hanging the housing.
102. The plant support apparatus of any of clauses 65 to 101, wherein the first opening is sized and shaped to accommodate growth of a plurality of plants across a width thereof.
103. A plant support apparatus for a vertical growing system in cooperation with one or more plants and planting media, the plant support apparatus comprising:
   a housing having a first opening on a first side thereof and a second opening on a second side thereof, the second side opposing the first side, and the housing defining a first chamber accessible through the first opening and a second chamber accessible through the second opening, the first chamber and the second chamber structurally configured to hold planting media along a length of the housing and to hold one or more plants in engagement with the planting media in a substantially fixed position relative to the housing; and
   a blocker disposed along one or more of the first opening and the second opening, the blocker structurally configured to mitigate water from passing from one or more of the first chamber and the second chamber to an external environment, and the blocker structurally configured to engage with, and support, a shoot system of the one or more plants.
104. The plant support apparatus of clause 103, further including planting media disposed within one or more of the first chamber and the second chamber, the planting media structurally configured for engagement with a root system of the one or more plants, and the planting media structurally configured to allow water to traverse through the planting media from a top end to a bottom end thereof in a controlled manner for absorption by the root system of the one or more plants.
105. The plant support apparatus of clause 104, wherein the planting media is a strip of material disposed through a length of the housing.
106. The plant support apparatus of clause 105, wherein the one or more plants are engageable with the planting media at a plurality of locations along the length of the housing.
107. The plant support apparatus of any of clauses 104 to 106, wherein the one or more plants are engageable with the planting media at an angle that intersects a horizontal axis disposed substantially normal to a longitudinal axis disposed through the length of the housing.
108. The plant support apparatus of clause 107, wherein the angle is about 45-degrees offset from the horizontal axis.
109. The plant support apparatus of any of clauses 107 to 108, wherein the angle is oriented toward the ground.
110. The plant support apparatus of any of clauses 107 to 108, wherein the angle is oriented away from the ground.
111. The plant support apparatus of any of clauses 104 to 110, wherein the planting media is configured to receive a predetermined amount of water such that the planting media maintains a predetermined saturation level for a predetermined period of time.
112. The plant support apparatus of any of clauses 104 to 111, wherein the planting media is removable from the housing.
113. The plant support apparatus of clause 112, wherein the planting media is replaceable within the housing after being removed.
114. The plant support apparatus of any of clauses 104 to 113, wherein the planting media includes a natural fiber.
115. The plant support apparatus of clause 114, wherein the planting media includes one or more of wool and nylon.
116. The plant support apparatus of any of clauses 104 to 115, further comprising a second planting media engageable to at least one of the planting media, the blocker, and the housing.
117. The plant support apparatus of clause 116, wherein the second planting media includes a hydroponic media.
118. The plant support apparatus of any of clauses 116 to 117, wherein the second planting media includes one or more of seeds and roots embedded therein.
119. The plant support apparatus of any of clauses 103 to 118, wherein the blocker includes a plurality of bristles projecting from opposing sides of one or more of the first opening and the second opening.
120. The plant support apparatus of clause 119, wherein the plurality of bristles are made of nylon.
121. The plant support apparatus of any of clauses 103 to 120, wherein the blocker includes a shape conforming material.
122. The plant support apparatus of any of clauses 103 to 121, wherein the blocker is structurally configured to block a predetermined amount of light from entering one or more of the first chamber and the second chamber.
123. The plant support apparatus of any of clauses 103 to 122, wherein the blocker is removeable from the housing.
124. The plant support apparatus of any of clauses 103 to 123, wherein the housing is structurally configured for hanging to facilitate a vertical arrangement of the one or more plants along the housing.
125. The plant support apparatus of clause 124, wherein the housing includes an engagement element disposed on a top end thereof, the engagement element couplable to a fixture for hanging the housing.
126. The plant support apparatus of clause 125, wherein the engagement element is configured for coupling with a positioning system.
127. The plant support apparatus of clause 126, wherein the positioning system includes a rail system.
128. The plant support apparatus of any of clauses 103 to 127, wherein the housing is manufactured via an extrusion process.
129. The plant support apparatus of any of clauses 103 to 128, wherein the first chamber and the second chamber are each structurally configured to allow water to traverse therethrough from a top housing end to a bottom housing end.

## Claims

1. A lighting apparatus (150, 1150) for a vertical growing system (100) for plants, the lighting apparatus comprising:
one or more lighting support structures (1152, 1352), each lighting support structure comprising:
a first side (1354) and a second side (1360) opposing the first side;
a first mounting surface (1358) and a second mounting surface (1364) disposed along the first side, the first mounting surface substantially aligned along a first axis (A1), the second mounting surface substantially aligned along a second axis (A2), wherein the first axis intersects the second axis such that the first mounting surface and the second mounting surface form a first substantially V-shaped structure on the first side with the first mounting surface oriented away from the second mounting surface; and
a third mounting surface (1365) and a fourth mounting surface (1366) disposed along the second side, the third mounting surface substantially aligned along a third axis (A3), the fourth mounting surface substantially aligned along a fourth axis (A4), wherein the third axis intersects the fourth axis such that the third mounting surface and the fourth mounting surface form a second substantially V-shaped structure on the second side with the third mounting surface oriented away from the fourth mounting surface;
a first set of light-emitting diodes (LEDs) (1167) coupled to the first mounting surface, and a second set of LEDs (1168) coupled to the second mounting surface, the first set of LEDs and the second set of LEDs structurally configured to emit light directed toward one or more plants disposed adjacent to the first side of the one or more lighting support structures; and
one or more drivers (188) electrically coupled to at least one of the first set of LEDs and the second set of LEDs, the one or more drivers configured to control power supplied thereto, and the one or more drivers located remotely from the one or more lighting support structures to mitigate heat transfer to at least one of the first side and the second side of the one or more lighting support structures.

2. The lighting apparatus of claim 1, further comprising a third set of LEDs coupled to the third mounting surface, and a fourth set of LEDs coupled to the fourth mounting surface, the third set of LEDs and the fourth set of LEDs structurally configured to emit light directed toward one or more plants disposed adjacent to the second side of the one or more lighting support structures.

3. The lighting apparatus of any of claims 1 to 2, wherein the first side and the second side are coupled via a core and disposed on opposite sides of the core,
optionally wherein the core is substantially hollow.

4. The lighting apparatus of any of claims 1 to 3, wherein each lighting support structure further comprises one or more interstitial spaces formed between one or more of the first mounting surface and the second mounting surface,
optionally wherein at least one of the one or more interstitial spaces is structurally configured to allow heat to pass therethrough at least in part to mitigate heat transfer to one or more plants disposed adjacent to the lighting apparatus.

5. The lighting apparatus of claim 4, wherein at least one of the one or more interstitial spaces is structurally configured to:
a) permit airflow through the one or more lighting support structures; and/or
b) provide a pathway along a length of the one or more lighting support structures.

6. The lighting apparatus of any of claims 1 to 5, wherein one or more of the first mounting surface, the second mounting surface, the third mounting surface, and the fourth mounting surface includes a void structurally configured to receive a fastener,
optionally wherein the void includes threading structurally configured for engagement with a threaded fastener for mounting one or more of an LED and a printed circuit board.

7. The lighting apparatus of any of claims 1 to 6, further comprising an engagement element disposed on a top end of the one or more lighting support structures, the engagement element couplable to a fixture for hanging the lighting apparatus adjacent to one or more plants.

8. The lighting apparatus of any of claims 1 to 7, wherein the first substantially V-shaped structure includes an angle of about 30 degrees between the first mounting surface and the second mounting surface.

9. The lighting apparatus of any of claims 1 to 8, further comprising a cover at least partially surrounding the one or more lighting support structures and LEDs coupled thereto,
optionally wherein the cover is structurally configured to prevent water from contacting the one or more lighting support structures and LEDs coupled thereto, and wherein the cover is structurally configured to permit light emitted from LEDs to pass through the cover.

10. The lighting apparatus of claim 9, wherein the cover is structurally configured for sliding engagement with the lighting support structure,
optionally wherein the cover includes one or more projections structurally configured for sliding engagement with the lighting support structure.

11. The lighting apparatus of claim 9 or claim 10, wherein the cover:
a) includes a substantially open top surface and a substantially open bottom surface; and/or
b) has a substantially cylindrical shape.

12. The lighting apparatus of any of claims 1 to 11, further comprising control circuitry for LEDs, the control circuitry coupled to the one or more lighting support structures.

13. The lighting apparatus of claim 12, wherein control circuitry is coupled to each of the first mounting surface and the second mounting surface,
optionally wherein control circuitry is coupled to each of a third mounting surface and a fourth mounting surface.

14. The lighting apparatus of claim 13, wherein the control circuitry includes a printed circuit board (PCB).

15. The lighting apparatus of claim 14, wherein the first set of LEDs and the second set of LEDs are each coupled to a corresponding PCB that is coupled to a corresponding mounting surface of the one or more lighting support structures,
optionally wherein a third set of LEDs and a fourth set of LEDs are each coupled to a corresponding PCB that is coupled to a corresponding mounting surface of the one or more lighting support structures.
